# EUROPEAN PATENT SPECIFICATION

(11) **EP 4 040 752 B1**
(45) Date of publication and mention of the grant of the patent: **22.01.2025**
(21) Application number: 20881986.2
(22) Date of filing: 23.09.2020
(51) Int. Cl.: H04L 9/40, H04L 69/28, H04L 9/08

(54) **SECURE COMMUNICATION METHOD AND DEVICE**
VERFAHREN UND VORRICHTUNG ZUR SICHEREN KOMMUNIKATION
PROCÉDÉ ET DISPOSITIF DE COMMUNICATION SÉCURISÉE

(30) Priority: 01.11.2019 CN 201911060960; 09.12.2019 CN 201911253333
(43) Date of publication of application: 10.08.2022
(73) Proprietor: Huawei Technologies Co., Ltd., Longgang District Shenzhen, Guangdong 518129 (CN)
(72) Inventor: CHU, Yuanzheng, Shenzhen, Guangdong 518129 (CN); FANG, Yonglong, Shenzhen, Guangdong 518129 (CN); ZOU, Dongqi, Shenzhen, Guangdong 518129 (CN)
(74) Representative: Körber, Martin Hans
(86) International application number: PCT/CN2020/116962
(87) International publication number: WO 2021/082813

(56) References cited:
- CN-A- 101 645 771
- CN-A- 108 199 837
- CN-A- 110 166 426
- US-A1- 2004 049 585
- US-A1- 2009 103 724
- US-A1- 2009 222 885
- ORMAN H: "The OAKLEY Key Determination Protocol", RFC 2412, INTERNET ENGINEERING TASK FORCE, IETF, 1 November 1998 (1998-11-01), XP015008196
- KAUFMAN C ET AL: "Internet Key Exchange Protocol Version 2 (IKEv2)", RFC 7296, INTERNET ENGINEERING TASK FORCE, IETF, 25 October 2014 (2014-10-25), XP015104486

## Description

### TECHNICAL FIELD

This application relates to the field of communications technologies, and in particular, to a method for secure communication and a device.

### BACKGROUND

Internet protocol security (IPSec) is a set of framework protocols defined by the Internet Engineering Task Force (IETF), which ensures security of communication over the Internet by using encrypted secure transmission channels. For secure transmission of data packets between devices based on an IPSec technology, a current commonly - used manner is to perform IPSec key negotiation based on an Internet key exchange (IKE) protocol. Based on IKE, IPSec security configuration parameters are exchanged by exchanging a plurality of session messages, to complete IPSec security association (SA) negotiation. Security protection is performed on packets based on an IPSec key determined through the negotiation.

In the context of the Internet of everything, for example, in a network scenario such as the Internet of things (IoT), a quantity of devices continuously increases. If an IPSec key is still determined through negotiation by using the IKE protocol, each device needs to exchange massive packets with other devices. This takes a long time, reduces efficiency, and wastes a large quantity of network resources.

US 2009/222885 A1 relates to a system and methodology facilitating network security and data access in an industrial control environment. An industrial control system is provided that includes an industrial controller to communicate with a network. At least one security layer can be configured in the industrial controller, wherein the security layer can be associated with one or more security components to control and/or restrict data access to the controller. An operating system manages the security layer in accordance with a processor to limit or mitigate communications from the network based upon the configured security layer or layers.

US 2009/103724 A1 discloses a communication device which performs automatic rekeying in a secured communication system.

ORMAN H: "The OAKLEY Key Determination Protocol", RFC 2412, INTERNET ENGINEERING TASK FORCE, IETF, November 1998 describes a protocol, named OAKLEY, by which two authenticated parties can agree on secure and secret keying material. The basic mechanism is the Diffie-Hellman key exchange algorithm.

KAUFMAN C ET AL: "Internet Key Exchange Protocol Version 2 (IKEv2)", RFC 7296, INTERNET ENGINEERING TASK FORCE, IETF, October 2014 describes version 2 of the Internet Key Exchange (IKE) protocol. IKE is a component of IPsec used for performing mutual authentication and establishing and maintaining Security Associations (SAs).

### SUMMARY

In view of this, embodiments of this application provide a method for secure communication and a device. When IPSec needs to be used between devices for secure communication, an IPSec key between the devices can be quickly and efficiently obtained, to implement secure communication in a network. The IPSec key in embodiments of this application may include an IPSec encryption key and/or an IPSec authentication key. The invention is defined in the independent claims. Advantageous features are defined in the dependent claims.

### BRIEF DESCRIPTION OF DRAWINGS

To describe technical solutions in embodiments of this application more clearly, the following briefly describes the accompanying drawings for describing embodiments. It is clear that the accompanying drawings in the following description show merely some embodiments of this application, and a person of ordinary skill in the art may derive other drawings from these accompanying drawings.
FIG. 1 is a signaling flowchart of a method for determining an encryption key through negotiation according to an embodiment of this application;
FIG. 2 is a signaling flowchart of a method 100 for secure communication according to an embodiment of this application;
FIG. 3 is a schematic diagram of a structure of a KeepAlive packet according to an embodiment of this application;
FIG. 4a is a schematic diagram of a parallel key negotiation template when IPSec aging periods are consistent according to an embodiment of this application;
FIG. 4b is a schematic diagram of a cross key negotiation template when IPSec aging periods are consistent according to an embodiment of this application;
FIG. 5a is a schematic diagram of a structure of a tunnel attribute added to a BGP message according to an embodiment of this application;
FIG. 5b is a schematic diagram of a structure of a tunnel attribute value Value field in FIG. 5a according to an embodiment of this application;
FIG. 6 is a signaling flowchart of a method 200 for secure communication according to an embodiment of this application;
FIG. 7 is a signaling flowchart of a method 300 for secure communication according to an embodiment of this application;
FIG. 8 is a signaling flowchart of a method 400 for secure communication according to an embodiment of this application;
FIG. 9A and FIG. 9B are a signaling flowchart of a method 500 for secure communication according to an embodiment of this application;
FIG. 10A and FIG. 10B are a signaling flowchart of a method 600 for secure communication according to an embodiment of this application;
FIG. 11 is a signaling flowchart of a method 1100 for secure communication according to an embodiment of this application;
FIG. 12 is a schematic diagram of tick values of a device 1 and a device 3 according to an embodiment of this application;
FIG. 13A and FIG. 13B are a signaling flowchart of a method 1300 for secure communication according to an embodiment of this application;
FIG. 14 is a schematic flowchart of a method 1400 for secure communication according to an embodiment of this application;
FIG. 15 is a schematic flowchart of another method 1500 for secure communication according to an embodiment of this application;
FIG. 16 is a schematic diagram of a structure of a first device according to an embodiment of this application;
FIG. 17 is a schematic diagram of a structure of a second device according to an embodiment of this application;
FIG. 18 is a schematic diagram of a structure of another first device according to an embodiment of this application;
FIG. 19 is a schematic diagram of a structure of another second device according to an embodiment of this application;
FIG. 20 is a schematic diagram of a structure of still another first device according to an embodiment of this application;
FIG. 21 is a schematic diagram of a structure of still another second device according to an embodiment of this application; and
FIG. 22 is a schematic diagram of a structure of a communications system according to an embodiment of this application.

### DESCRIPTION OF EMBODIMENTS

With popularization of the Internet, more and more data packets are transmitted by using the Internet. To overcome a problem that data transmission in the Internet in a plaintext form is insecure, an Internet protocol security (English: Internet Protocol Security, IPSec for short) technology is proposed. The IPSec technology is a set of open network security protocols based on cryptography, works at an Internet protocol (English: Internet Protocol, IP for short) layer, and provides protection for IP layer and upper-layer protocols, for example, may provide security services such as IP packet encryption, data integrity check, data source verification, and anti-replay.

IPSec includes a set of network security protocols, for example, may include an authentication header (English: Authentication Header, AH for short) protocol, an encapsulating security payload (Encapsulating Security Payload, ESP for short) protocol, an encryption algorithm, an authentication algorithm, and an Internet key exchange (English: Internet Key Exchange, IKE for short) protocol. The AH protocol can provide data source verification and data integrity check functions. In addition to the data source verification and data integrity check functions, the ESP protocol can further provide an IP packet encryption function. The encryption algorithm may include a data encryption standard (English: Data Encryption Standard, DES for short) algorithm, a triple data encryption standard (3DES) algorithm, an advanced encryption standard (AES) algorithm, and the like. The authentication algorithm may include a message digest (MD) algorithm and a secure hash algorithm (SHA), such as MD5, SHA1, and SHA2. The IKE protocol may include, for example, a key DH exchange algorithm and an Internet security association key management protocol (ISAKMP). Essentially, the IKE protocol may be used to determine an IPSec SA through negotiation by exchanging packets between devices.

The IPSec SA is a data basis for IPSec communication between the devices. The devices determine an IPSec SA through negotiation and perform IPSec communication based on the IPSec SA. The IPSec SA may specifically include: a key DH exchange group, an encapsulation mode, an authentication algorithm, an encryption algorithm, an encryption key, an authentication key, and the like. The IPSec SA is used to guide secure data packet transmission between the devices.

An IPSec key is a key that is synthesized based on a private key generated by a local device and a public key sent by a peer device after public key exchange between the two devices. An IPSec key generated by using a symmetric key algorithm is a shared key consistent between two devices communicating with each other, and is used to protect data packets exchanged between the devices.

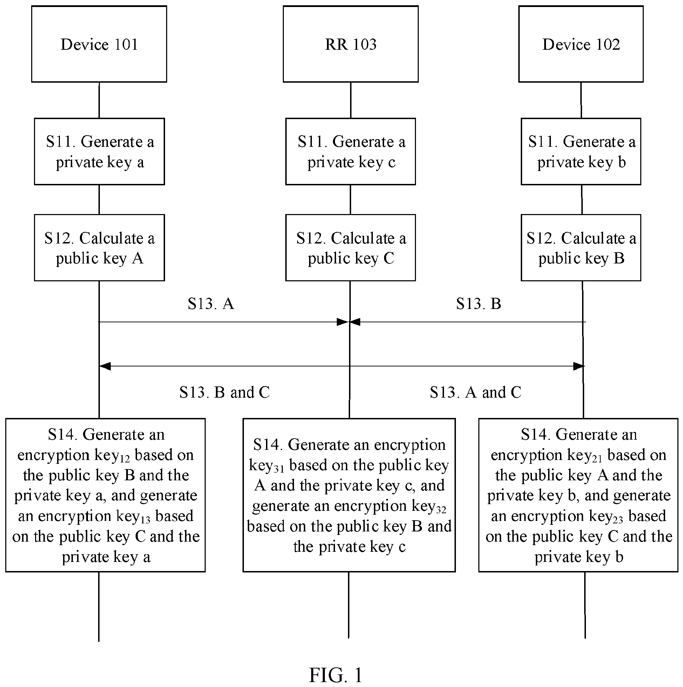

In an example, the IPSec key is an encryption key. FIG. 1 shows a process of determining an encryption key through negotiation based on a key DH exchange algorithm. The scenario includes a device 101, a device 102, and a route reflector (English: Route Reflector, RR for short) 103. The device 101 and the device 102 are two devices participating in communication (which are referred to as communication peers for short). Referring to FIG. 1, for example, the process of determining an encryption key through negotiation may include the following steps. S11. The device 101, the device 102, and the RR 103 respectively generate corresponding private keys a, b, and c. S12. The device 101, the device 102, and the RR 103 respectively calculate corresponding public keys based on the generated private keys, to obtain public keys A, B, and C. S13. The device 101 and the device 102 respectively send the public keys A and B to the RR 103, and the RR 103 floods a network with the public keys A and B, as well as the public key C of the RR 103. S14. The device 101 generates an encryption key₁₂ based on the public key B and the private key a, and the device 101 generates an encryption key₁₃ based on the public key C and the private key a. Similarly, the device 102 generates an encryption key₂₁ based on the public key A and the private key b, and the device 102 generates an encryption key₂₃ based on the public key C and the private key b. The RR 103 generates an encryption key₃₁ based on the public key A and the private key c, and the RR 103 generates an encryption key₃₂ based on the public key B and the private key c. The encryption key₁₂ and the encryption key₂₁ are consistent, denoted as an encryption key (also referred to as a shared key) between the device 101 and the device 102. Similarly, the encryption key₁₃ and the encryption key₃₁ are consistent, and the encryption key₂₃ and the encryption key₃₂ are consistent.

An IPSec security parameter (such as the public key and the private key) of the device is continuously updated. Each time the IPSec security parameter is updated, it is considered that another IPSec aging period starts. Therefore, IPSec key negotiation needs to be performed again to determine an IPSec key corresponding to the new IPSec aging period starting.

Currently, IPSec key negotiation between devices is generally implemented in a process in which an IPSec SA is dynamically negotiated by using the IKE protocol. The IKE protocol is an application layer protocol based on a user datagram protocol (UDP). However, when the IKE protocol is used to negotiate and determine an IPSec key for a pair of devices, at least six messages need to be exchanged between the pair of devices. In many large-scale networking scenarios (such as an IoT scenario), due to an increasing quantity of devices and a continuously updated IPSec security parameter, each device needs to exchange massive messages with other devices to negotiate an IPSec key in each IPSec aging period. This consumes many resources in the device and the network. Moreover, the manner of IPSec key negotiation using the IKE protocol has problems of long time consumption and low efficiency. In a scenario with an increasing quantity of devices in the network, a requirement to determine an IPSec key to implement quick and efficient secure communication cannot be met.

Based on this, in embodiments of this application, a method for quick, efficient, and convenient secure communication is provided. A key negotiation template is established on two devices communicating with each other, and each time an IPSec key needs to be negotiated, a local device may generate the IPSec key according to a negotiation rule of the key negotiation template based on a received public key generated by a peer device in a current IPSec aging period and received status information corresponding to the public key that are sent by the peer device, and a private key generated by the local device in a current IPSec aging period and status information corresponding to the private key. In the technical solution of this application, IPSec key negotiation is not performed based on the IKE protocol. Compared with a manner in which a plurality of packets need to be exchanged when an IPSec key is negotiated between two devices by using the IKE protocol, the technical solution of this application reduces a quantity of packets exchanged between the two devices, and improves IPSec key negotiation efficiency, and reduces system resource usage. In large-scale networking scenarios such as IoT, when massive devices are interconnected, massive packets exchanged due to negotiation performed based on the IKE protocol are greatly reduced, thereby reducing system resource usage. In this application, status information corresponding to a public-private key pair in an IPSec aging period, status information corresponding to a public key in the IPSec aging period, and status information corresponding to a private key in the IPSec aging period are a same piece of status information.

Before specific embodiments of this application are described, some basic concepts in this application are briefly described first.

The IPSec aging period is a validity period of an IPSec security parameter on the device, and is used to indicate a frequency of updating the IPSec security parameter. The device may predefine an IPSec aging period (for example, one day) of the device, generate, in each IPSec aging period, a public-private key pair in the IPSec aging period, and obtain, by exchanging a public key in the newly generated public-private key pair, an IPSec key corresponding to the IPSec aging period, to implement secure communication in the IPSec aging period. For example, assuming that the device 101 defines an IPSec aging period to be 10 hours, the device 101 generates a private key 1 and a public key 1 when the first IPSec aging period starts, and after 10 hours, the device 101 enters the second IPSec aging period, and generates a private key 2 and a public key 2 that correspond to the second IPSec aging period. Durations of IPSec aging periods defined by devices in the network may be the same or different. This is not specifically limited herein. The public-private key pair in this application includes a public key and a private key.

It may be understood that, in each IPSec aging period, the device generates a new public-private key pair different from a public-private key pair in a previous IPSec aging period.

The key negotiation template is a template that is established based on indication information exchanged between devices communicating with each other and used to indicate status information of a public-private key pair generated in an IPSec aging period, and that is used to guide determining of a corresponding IPSec key in each IPSec aging period. For example, when establishing the first communication connection, two devices (the two devices may also be referred to as communication peers) establish a key negotiation template. The key negotiation template may be classified into a parallel key negotiation template and a cross key negotiation template based on whether indication information exchanged between the communication peers during establishment of the key negotiation template is the same. If the exchanged indication information is the same, the established key negotiation template is a parallel key negotiation template; otherwise, if the exchanged indication information is different, the established key negotiation template is a cross key negotiation template.

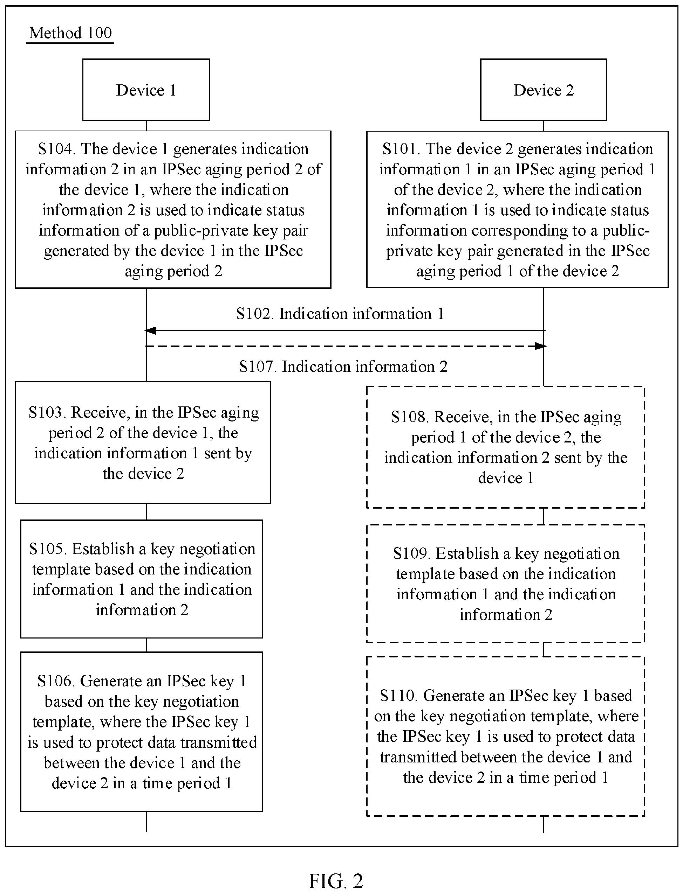

Once established between the two devices, the key negotiation template generally cannot be changed until the communication connection between the two devices is disconnected. For details and implementations of establishing the key negotiation template, refer to related descriptions in embodiments shown in FIG. 2, FIG. 11, and FIG. 13A and FIG. 13B to FIG. 15.

It should be noted that, in the IPSec SA, the IPSec key changes with the IPSec aging period, but other IPSec security parameters (such as an encryption algorithm, an authentication algorithm, and an encapsulation mode) may change or remain unchanged in different aging periods. Embodiments of this application focus on a process of determining an IPSec key through negotiation.

FIG. 2 is a schematic flowchart of a method 100 for secure communication according to an embodiment of this application. Referring to FIG. 2, the method 100 is applied to a network including a device 1 and a device 2. For example, the method 100 may include the following steps.

S101. The device 2 generates indication information 1 in an IPSec aging period 1 of the device 2, where the indication information 1 is used to indicate status information corresponding to a public-private key pair generated in the IPSec aging period 1 of the device 2.

Indication information mentioned in this application, or indication information numbered by using Arabic numerals, such as the indication information 1, indication information 2, ..., or indication information numbered by using ordinal numerals, such as first indication information, second indication information, ..., is used to indicate status information corresponding to a public key and/or a private key generated in a current IPSec aging period by a device that sends the indication information. Status information corresponding to a public key and/or a private key generated in each IPSec aging period is iterated according to an agreed rule when each IPSec aging and updating occurs, that is, indication information is iterated according to an agreed rule when each IPSec aging and updating occurs.

In a specific implementation, the indication information may be a numerical value, and IPSec aging period changes are indicated by using numerical values that occur alternately. The numerical values that occur alternately are used as indication information, and may be denoted as tick values. The tick value is used to indicate a state of a public-private key pair generated by the device in an IPSec aging period. State changes of the device from one IPSec aging period to a next IPSec aging period are indicated by using alternate occurrences of two values, which may also be understood as indicating state changes of the device from one public-private key pair to another public-private key pair. For example, the tick values are 0 and 1. The tick value equal to 0 may indicate an i^{th} IPSec aging period (i=1, 3, 5, ...), the tick value equal to 1 indicates a j^{th} IPSec aging period (j=2, 4, 6, ...), and the i^{th} IPSec aging period and the j^{th} IPSec aging period occur alternately. Public-private key pair updates and IPSec aging period changes of the device are indicated by using alternate occurrences of the tick values 0 and 1.

In another specific implementation, alternatively, the indication information may be a character string, and public-private key pair updates and IPSec aging period changes of the device are indicated by using character strings that occur alternately. For example, when the indication information of the device changes from a character string a to a character string b or changes from the character string b to the character string a, it indicates that the device is updated from a current IPSec aging period to a next IPSec aging period.

It should be noted that the indication information includes, but is not limited to, forms of the character string and the tick value, and any form in which the IPSec aging period change may be indicated by using a predetermined rule falls in the scope of the indication information in this embodiment of this application.

The device 1 and the device 2 may respectively define their own IPSec aging periods, and define, as indication information, status information indicating a public-private key pair generated after the IPSec aging period changes. For example, the device 1 may define a duration of each IPSec aging period of the device 1 to be 10 hours, and define indication information to be a tick value, and the device 2 may define a duration of each IPSec aging period of the device 2 to be 2 hours, and define indication information to be a tick value. The indication information 1 in S101 may be, for example, 0, and is used to indicate the IPSec aging period 1 of the device 2.

S102. The device 2 sends the indication information 1 to the device 1.

During specific implementation, S102 may be implemented by the device 2 by sending a packet to the device 1. The packet may be, for example, a connection detection packet, or the packet may be, for example, a newly defined packet, used to negotiate a key negotiation template. A specific packet format is not specifically limited in this application. For example, the device 2 sends a connection detection packet 1 to the device 1. The connection detection packet 1 includes a field 1, and is used to carry the indication information 1 of the device 2. The field 1 is used to indicate the device 1 to establish a key negotiation template. The connection detection packet is a detection packet used to detect whether a connection exists between devices. The connection detection packet is frequently exchanged between devices and is regular. Therefore, by selecting the connection detection packet to exchange indication information, current indication information of a local device can be reliably and quickly notified to a peer device, to reliably and quickly trigger establishment of a key negotiation template, and enable secure communication.

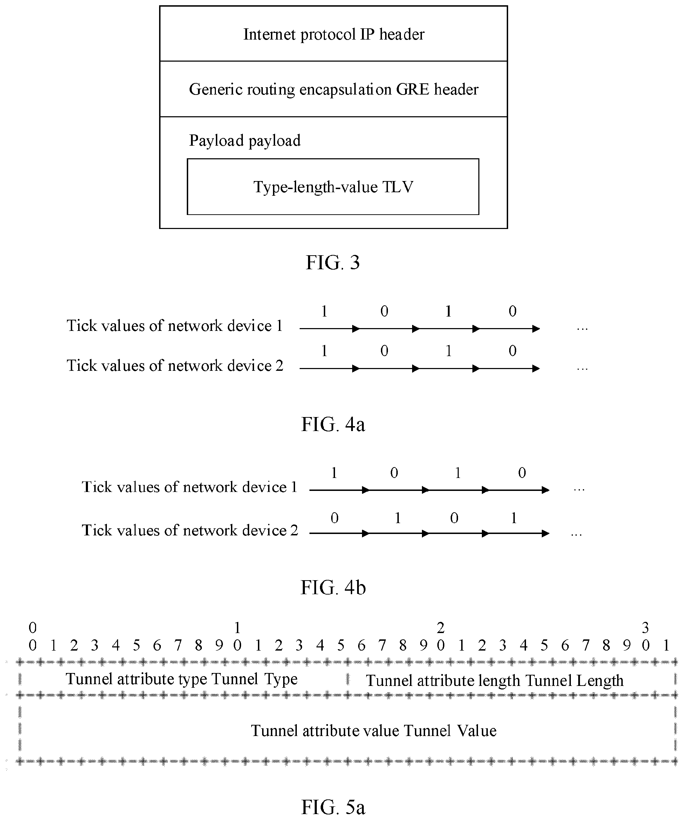

The connection detection packet includes, but is not limited to, a keepalive (English: KeepAlive) packet and a bidirectional forwarding detection (English: Bidirectional Forwarding Detection, BFD for short) packet. In this application, the connection detection packet is extended with a new field. For example, a type-length-value (English: Type-Length-Value, TLV for short) field or a type-value (English: Type-Value, TV for short) field is added, to carry the indication information. The KeepAlive packet is used as an example. Referring to FIG. 3, the KeepAlive packet includes an IP header, a generic routing encapsulation (English: Generic Routing Encapsulation, GRE for short) header, and payload (English: payload). In this case, a TLV field or a TV field may be added to the payload, and the indication information 1 is carried in a Value part of the added TLV field or TV field. The added TLV field or TV field is used to indicate the device 1 to establish a key negotiation template based on the indication information 1. The indication information is carried in the connection detection packet that needs to be transmitted between the devices, so that a new packet does not need to be defined to transmit the indication information. This saves network resources. Moreover, because the connection detection packet is characterized by frequent exchange and strong regularity, it is more reliable and quick to exchange the indication information by using the connection detection packet so as to trigger establishment of a key negotiation template, thereby improving efficiency of obtaining an IPSec key.

S103. The device 1 receives, in an IPSec aging period 2 of the device 1, the indication information 1 sent by the device 2.

S104. The device 1 generates indication information 2 in the IPSec aging period 2 of the device 1, where the indication information 2 is used to indicate status information of a public-private key pair generated by the device 1 in the IPSec aging period 2.

It may be understood that, the indication information 2 includes, but is not limited to, a character string and a tick value. For a specific description, refer to the description about the indication information in S101.

For example, the indication information 2 of the device 1 in the IPSec aging period 2 is 0. For another example, the indication information 2 of the device 1 in the IPSec aging period 2 is 1.

S105. The device 1 establishes a key negotiation template based on the indication information 1 and the indication information 2.

The key negotiation template is used to guide the device 1 to generate a corresponding IPSec key in each IPSec aging period. Based on whether the indication information 1 and the indication information 2 are the same, the established key negotiation templates may be classified into a parallel key negotiation template and a cross key negotiation template. When the indication information 1 and the indication information 2 are the same, the key negotiation template is a parallel key negotiation template. When the indication information 1 and the indication information 2 are different, the key negotiation template is a cross key negotiation template.

For example, the indication information is a tick value. In a specific implementation, the indication information 1 and the indication information 2 are the same. For example, assuming that both the indication information 1 and the indication information 2 are 0, the key negotiation template established by the device 1 in S105 is a parallel key negotiation template. For another example, assuming that both the indication information 1 and the indication information 2 are 1, the key negotiation template established by the device 1 in S105 is also a parallel key negotiation template. It should be noted that, in subsequent IPSec aging periods, provided that tick values of the device 1 and the device 2 are the same, that is, the tick values of the device 1 and the device 2 are both 0, or the tick values of the device 1 and the device 2 are both 1, it may be considered that the parallel key negotiation template is met. For example, referring to FIG. 4a, which shows an example in which durations of IPSec aging periods on the device 1 and the device 2 are consistent, on the device 1, starting from the first IPSec aging period, corresponding tick values are 1, 0, 1, 0, ..., respectively; and on the device 2, starting from the first IPSec aging period, corresponding tick values are 1, 0, 1, 0, ..., respectively. After the parallel key negotiation template is established, when an IPSec key is subsequently generated based on the parallel key negotiation template, a matching condition of the parallel key negotiation template needs to be met, that is, a public key of a peer end and a private key of a local end that are used to generate the IPSec key correspond to a same tick value.

In another specific manner, the indication information 1 and the indication information 2 are different. For example, the indication information 1 is 0, the indication information 2 is 1, and the key negotiation template established by the device 1 in S105 is a cross key negotiation template. For another example, the indication information 1 is 1, the indication information 2 is 0, and the key negotiation template established by the device 1 in S105 is also a cross key negotiation template. It should be noted that, in subsequent IPSec aging periods, provided that tick values of the device 1 and the device 2 are different, that is, the tick value of the device 1 is 1 and the tick value of the device 2 is 0, or the tick value of the device 1 is 0 and the tick value of the device 2 is 1, it may be considered that the cross key negotiation template is met. For example, referring to FIG. 4b, which shows an example in which durations of IPSec aging periods on the device 1 and the device 2 are consistent, on the device 1, starting from the first IPSec aging period, corresponding tick values are 1, 0, 1, 0, ..., respectively; and on the device 2, starting from the first IPSec aging period, corresponding tick values are 0, 1, 0, 1, ..., respectively. After the cross key negotiation template is established, when an IPSec key is subsequently generated based on the cross key negotiation template, a matching condition of the cross key negotiation template needs to be met, that is, a public key of a peer end and a private key of a local end that are used to generate the IPSec key correspond to different tick values. It may be understood that, because an IPSec aging period generally has a relatively long duration, and time for the device 1 and the device 2 to establish a key negotiation template is very close, in this embodiment of this application, key negotiation templates established on the device 1 and the device 2 are a same key negotiation template.

S106. The device 1 generates an IPSec key 1 based on the key negotiation template, where the IPSec key 1 is used to protect data transmitted between the device 1 and the device 2 in a time period 1.

It may be understood that, after the key negotiation template is established, the device 1 may determine, through negotiation based on the established key negotiation template, an IPSec key corresponding to a current IPSec aging period, or the device 1 may also determine, through negotiation based on the established key negotiation template, an IPSec key corresponding to a subsequent IPSec aging period.

The IPSec key is used to perform security protection on data transmitted between the devices. The device generally determines whether current indication information of a local end and current indication information of a peer end meet a matching condition of the key negotiation template. If the matching condition is met, the device may generate an IPSec key based on a current private key of the local end and a current public key of the peer end.

In a specific implementation, S106 may include: S1061. The device 2 sends a packet 1 to the device 1 in an IPSec aging period 3 of the device 2. The packet 1 carries indication information 3 and a public key 1, and the public key 1 is generated by the device 2 in the IPSec aging period 3. S1062. The device 1 receives, in an IPSec aging period 4 of the device 1, the packet 1 sent by the device 2. S1063. The device 1 generates the IPSec key 1 based on the key negotiation template, the indication information 3, the public key 1, and indication information 4 and a private key 1 of the device 1 in the IPSec aging period 4.

In a specific implementation, the packet 1 may be a border gateway protocol (English: Border Gateway Protocol, BGP for short) message or a user datagram protocol (English: User Datagram Protocol, UDP for short) packet. Alternatively, the packet 1 may be a newly defined dedicated packet.

When the packet 1 is a BGP message, the BGP message may be extended to carry the current public key 1 and indication information 3. For example, a tunnel attribute may be added to the BGP message, to carry the public key 1 and the indication information 3.

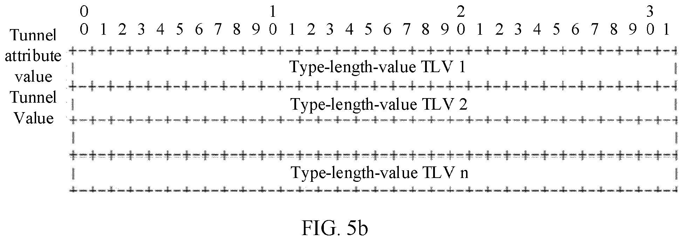

In an example, a tunnel attribute may be extended in the BGP message, and the extended tunnel attribute may be, for example, a TLV field or a TV field. The TLV field is used as an example. As shown in FIG. 5a, a tunnel attribute type Tunnel Type field in the extended tunnel attribute TLV field is used to indicate that the tunnel attribute carries an IPSec security parameter, and a tunnel attribute value Tunnel Value field is shown in FIG. 5b. A plurality of TLV fields may be extended to carry IPSec security parameters.

In another example, alternatively, a plurality of tunnel attributes may be extended in the BGP message, and each extended tunnel attribute may be a TLV field or a TV field. The TLV field is used as an example. A Tunnel Type field in each extended tunnel attribute TLV field is used to indicate one or more IPSec security parameters carried in the tunnel attribute, and one or more TLV fields may be extended in a Value field, to indicate a specific value of the IPSec security parameter indicated in the Tunnel Type field.

It may be understood that, in one case, if the IPSec key is an encryption key, the BGP message may include two extended TLV fields, and Value fields of the two extended TLV fields are respectively used to carry the public key 1 for encryption and the indication information 3. In another case, if the IPSec key is an authentication key, the BGP message may include two extended TLV fields, and Value fields of the two extended TLV fields are respectively used to carry the public key 1 for authentication and the indication information 3. In still another case, if the IPSec key includes an authentication key and an encryption key, the BGP message may include three extended TLV fields, and Value fields of the three extended TLV fields are respectively used to carry the public key 1 for encryption, the public key 1 for authentication, and the indication information 3. It should be noted that, the BGP message may further carry security parameters such as a DH group, an encapsulation mode, an encryption algorithm, and an authentication algorithm by extending more TLV fields in an added tunnel attribute or adding more tunnel attributes, to negotiate content that needs to be met for secure communication other than the IPSec key in an IPSec SA.

In a specific implementation, the packet 1 is a UDP packet, and the UDP packet may be extended to carry the indication information 1 and the public key 1. The UDP packet may be further extended to carry security parameters such as a DH group, an encapsulation mode, an encryption algorithm, and an authentication algorithm. For example, a TLV field or a TV field may be extended in payload (English: payload) of the UDP packet, and the extended TLV field or TV field is used to carry the current public key 1 and indication information 3.

In some possible implementations, in addition to carrying the public key 1 and the indication information 3 of the device 2 in the current IPSec aging period, the packet 1 further carries at least one of the following IPSec security parameters: an encapsulation mode 1, a DH group 1, an encryption algorithm 1, and an authentication algorithm of the device 2. In this case, the method 100 may further include: The device 1 determines whether the security parameter of the device 2 matches a current security parameter of the device 1, and if they match, determines that the matched security parameter and the IPSec key 1 are an IPSec SA. The IPSec SA is used to implement secure communication between the device 1 and the device 2 in the time period 1, and the current security parameter of the device 1 is at least one of an encapsulation mode 2, an encryption algorithm 2, and an authentication algorithm 2.

In some specific implementations, the DH group, the encapsulation mode, the encryption algorithm, and the authentication algorithm may also be carried in an extended TLV field of the BGP message or the UDP packet. The BGP message is used as an example. In one case, a tunnel attribute may be added to the BGP message, at least six TLV fields are extended in the tunnel attribute, and each TLV field carries one of the parameters: the public key, the indication information, the DH group, the encapsulation mode, the encryption algorithm, and the authentication algorithm. In another case, at least six tunnel attributes may be added to the BGP message, and the indication information, the public key, the DH group, the encapsulation mode, the encryption algorithm, and the authentication algorithm are respectively carried in the tunnel attributes.

In this way, according to the method provided in this embodiment of this application, a function of quickly and accurately determining an IPSec key can be implemented, and more content in an IPSec SA can be determined through negotiation by carrying another security parameter, thereby providing more data bases for implementing secure communication based on IPSec.

After "the device 1 generates indication information 2 in the IPSec aging period 2 of the device 1" in S104, the method 100 may further include: S107. The device 1 sends the indication information 2 to the device 2. S108. The device 2 receives, in the IPSec aging period 1 of the device 2, the indication information 2 sent by the device 1. S109. The device 2 establishes a key negotiation template based on the indication information 1 and the indication information 2. S110. The device 2 generates the IPSec key 1 based on the key negotiation template. For S107 and S108, refer to the related descriptions of S102 and S103, for S109, refer to the related description of S105, and for S110, refer to the related description of S106. Specific implementations are not described in detail again. S110 may specifically include: The device 2 may determine, through negotiation based on the established key negotiation template, an IPSec key corresponding to a current IPSec aging period, or the device 2 may also determine, through negotiation based on the established key negotiation template, an IPSec key corresponding to a subsequent IPSec aging period.

In the time period 1, the method 100 may further include: After S106, the device 1 sends, to the device 2, data on which security protection is performed by using the IPSec key 1. After S110, the device 2 sends, to the device 1, data on which security protection is performed by using the IPSec key 1.

In an example, if exchanged data needs to be encrypted, the IPSec key may be configured as an encryption key, and the IPSec key 1 generated in S106 and S 110 is an encryption key 1. In this case, that the device 1 performs security protection on data 1 by using the IPSec key 1 means that the device 1 encrypts the data 1 by using the encryption key 1 and then transmits the data 1 to the device 2, and the device 2 decrypts received data based on the encryption key 1 to obtain the data 1.

In another example, if authentication needs to be performed on exchanged data, the IPSec key may be configured as an authentication key, and the IPSec key 1 generated in S106 and S110 is an authentication key 1. In this case, that the device 1 performs security protection on data 1 by using the IPSec key 1 means that the device 1 authenticates the data 1 by using the authentication key 1. For example, for an IP packet, a digital signature is generated based on the authentication key and an authentication algorithm, and the device 2 authenticates integrity and authenticity of the IP packet based on the digital signature, to ensure secure communication.

In still another example, if encryption and authentication need to be performed on an exchanged data packet, the IPSec key may be configured to include an encryption key and an authentication key, and the IPSec key 1 generated in S106 and S110 includes an encryption key 1 and an authentication key 1. In this case, that the device 1 performs security protection on data 1 by using the IPSec key 1 means that the device 1 first encrypts the data 1 by using the encryption key 1, then issues a digital signature to encrypted data by using the authentication key 1, and sends the encrypted data to the device 2, and the device 2 performs integrity and authenticity authentication on the digital signature based on the authentication key 1, and after the authentication succeeds, performs decryption by using the encryption key 1 to obtain the data 1.

It should be noted that, this embodiment of this application is applicable to the following scenarios: Scenario 1: The device 1 and the device 2 may be directly connected. In this case, operations such as sending and receiving in the embodiment shown in FIG. 2 are performed through direct information exchange between the device 1 and the device 2. Scenario 2: The device 1 and the device 2 may alternatively be indirectly connected. For example, the device 1 is connected to the device 2 by using another device such as a controller. In this case, operations such as sending and receiving in the embodiment shown in FIG. 2 are completed by using the device such as the controller by forwarding information exchanged between the device 1 and the device 2. Scenario 1 is used as an example for related descriptions in this embodiment of this application.

In this way, in this embodiment of this application, when a secure connection needs to be established, two devices participating in communication pre-establish a key negotiation template, so that during subsequent IPSec key negotiation, each device can quickly generate a corresponding IPSec key in a current IPSec aging period of the device based on the pre-established key negotiation template. In this way, in the technical solution of this application, IPSec key negotiation is not performed based on an IKE protocol. Therefore, compared with a manner in which a plurality of packets need to be exchanged when an IPSec key is negotiated between two devices by using the IKE protocol, the technical solution of this application effectively reduces a quantity of packets exchanged between the two devices, and improves IPSec key negotiation efficiency, and reduces system resource usage. Especially in large-scale networking scenarios such as IoT, when massive devices are interconnected, massive packets exchanged due to negotiation performed based on the IKE protocol are greatly reduced, thereby reducing system resource usage.

In some specific embodiments, to avoid insecure or ineffective data transmission caused by inconsistent time in synthesizing a new IPSec key by the devices, in this embodiment of this application, the method may further include: The device stores an IPSec key used before, and when synthesizing the new IPSec key, performs security protection on to-be-transmitted data by using an IPSec key synthesized in a previous IPSec aging period. In this way, it can be ensured that communication peers use a same IPSec key to perform security protection on data in a same time period, thereby improving effectiveness of security protection performed on the to-be-transmitted data by using the IPSec key, and improving a probability of secure and effective data transmission.

Generally, durations of all IPSec aging periods defined on a same device may be the same, and durations of IPSec aging periods of different devices may be the same or different. The device 1 or the device 2 generates the IPSec key according to a negotiation rule based on the key negotiation template. The negotiation rule includes: (1) status information corresponding to a latest private key generated by a local device and status information corresponding to a latest public key of a peer device meet a matching condition of the key negotiation template; (2) an IPSec key is generated by using the latest private key of the local device and the latest public key of the peer device; and (3) the public key and the private key that participate in generating the IPSec key cannot participate in generating a next IPSec key. Optionally, the rule may further include: an IPSec key synthesized in a current IPSec aging period of the device is used to protect data transmitted in a next IPSec aging period adjacent to the current IPSec aging period.

In some possible implementations, assuming that each IPSec aging period of the device 1 has a duration 1, each IPSec aging period of the device has a duration 2, and the duration 1 and the duration 2 are equal, an IPSec key corresponding to each IPSec aging period may be obtained based on the pre-established key negotiation template and a public key exchanged in each IPSec aging period.

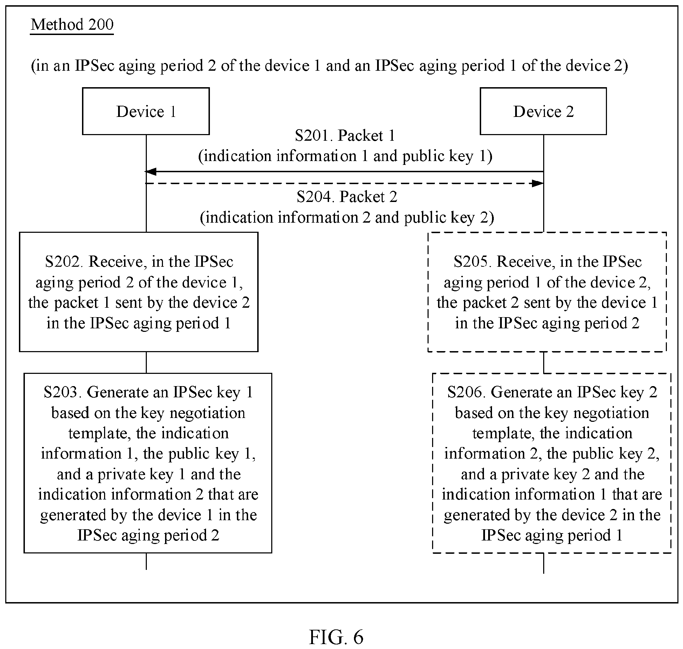

In an example, an embodiment of this application provides a method 200 for secure communication. Referring to FIG. 6, the method 200 includes the following steps.

S201. The device 2 sends a packet 1 to the device 1 in an IPSec aging period 1 of the device 2. The packet 1 carries indication information 1 and a public key 1, and the indication information 1 is used to indicate status information of a public-private key pair generated by the device 2 in the IPSec aging period 1.

S202. The device 1 receives, in an IPSec aging period 2 of the device 1, the packet 1 sent by the device 2 in the IPSec aging period 1.

S203. The device 1 generates an IPSec key 1 based on the key negotiation template, the indication information 1, the public key 1, and a private key 1 and indication information 2 that are generated by the device 1 in the IPSec aging period 2. The indication information 2 is used to indicate status information of a public-private key pair generated by the device 1 in the IPSec aging period 2.

It should be noted that, the method 200 may further include:
S204. The device 1 sends a packet 2 to the device 2 in the IPSec aging period 2 of the device 1. The packet 2 carries the indication information 2 and a public key 2.
S205. The device 2 receives, in the IPSec aging period 1 of the device 2, the packet 2 sent by the device 1 in the IPSec aging period 2.
S206. The device 2 generates an IPSec key 2 based on the key negotiation template, the indication information 2, the public key 2, and a private key 2 and the indication information 1 that are generated by the device 2 in the IPSec aging period 1. The IPSec key 2 is the same as the IPSec key 1 generated in S203.

In the method 200, the public key 2 and the private key 1 are the public-private key pair generated by the device 1 in the IPSec aging period 2, and the public key 1 and the private key 2 are the public-private key pair generated by the device 2 in the IPSec aging period 1.

In a specific implementation, both the packet 1 and the packet 2 may be BGP messages or UDP packets. For details, refer to related descriptions about the public key and the indication information that are carried in the BGP message or the UDP packet in S106 in the embodiment shown in the method 100.

S201 and S202 may be performed at any moment after S101, and S204 and S205 may be performed at any moment after S104. S203 is a specific implementation of S106. S206 is a specific implementation of S110.

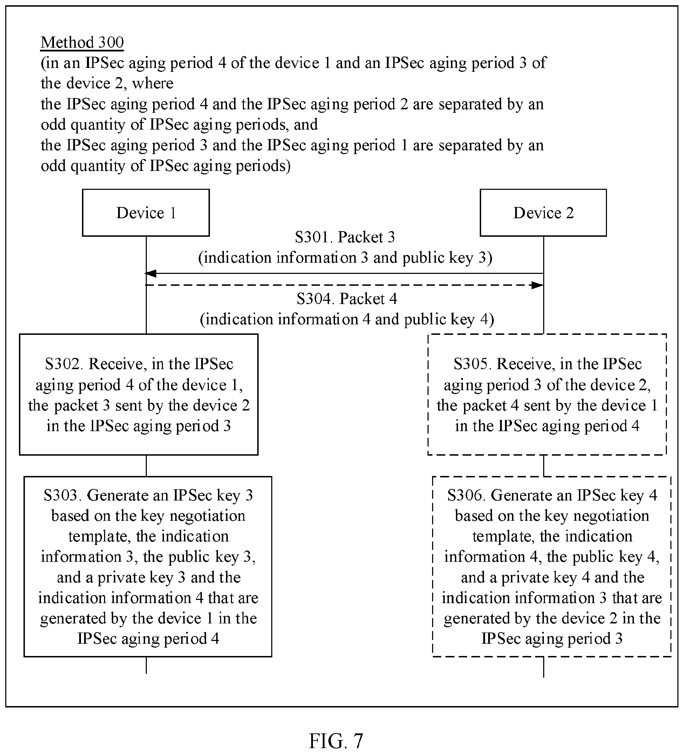

In another example, in an IPSec aging period 4 of the device 1 and an IPSec aging period 3 of the device 2, where the IPSec aging period 4 and the IPSec aging period 2 are separated by an odd quantity of IPSec aging periods, and the IPSec aging period 3 and the IPSec aging period 1 are also separated by an odd quantity of IPSec aging periods, an embodiment of this application further provides a method 300 for secure communication. Referring to FIG. 7, for example, the method 300 may include the following steps.

S301. The device 2 sends a packet 3 to the device 1 in the IPSec aging period 3 of the device 2. The packet 3 carries indication information 3 and a public key 3, and the indication information 3 is used to indicate status information of a public-private key pair generated by the device 2 in the IPSec aging period 3.

S302. The device 1 receives, in the IPSec aging period 4 of the device 1, the packet 3 sent by the device 2 in the IPSec aging period 3.

S303. The device 1 generates an IPSec key 3 based on the key negotiation template, the indication information 3, the public key 3, and a private key 3 and indication information 4 that are generated by the device 1 in the IPSec aging period 4.

The method 300 may further include:
S304. The device 1 sends a packet 4 to the device 2 in the IPSec aging period 4 of the device 1. The packet 2 carries the indication information 4 and a public key 4, and the indication information 4 is used to indicate status information of a public-private key pair generated by the device 1 in the IPSec aging period 4.
S305. The device 2 receives, in the IPSec aging period 3 of the device 2, the packet 4 sent by the device 1 in the IPSec aging period 4.
S306. The device 2 generates an IPSec key 4 based on the key negotiation template, the indication information 4, the public key 4, and a private key 4 and the indication information 3 that are generated by the device 2 in the IPSec aging period 3. The IPSec key 4 generated in S306 is the same as the IPSec key 3 generated in S303.

Because IPSec updates are indicated by using alternate occurrences of indication information, the device generates a same piece of indication information after an odd quantity of IPSec aging periods. Because the IPSec aging period 3 and the IPSec aging period 1 are separated by an odd quantity of IPSec aging periods, and the IPSec aging period 4 and the IPSec aging period 2 are separated by an odd quantity of IPSec aging periods, the indication information 3 and the indication information 1 are the same, and the indication information 4 and the indication information 2 are the same. Moreover, because the duration 1 and the duration 2 are equal, the quantities of IPSec aging periods of the separation are the same.

In a specific implementation, S303 may include: The device 1 determines whether the indication information 3 and the indication information 4 meet the matching condition of the key negotiation template. If the matching condition is met, the device 1 synthesizes the IPSec key 3 based on the public key 3 and the private key 3. Otherwise, the device 1 does not synthesize the IPSec key 3. S306 may include: The device 2 determines whether the indication information 3 and the indication information 4 meet the matching condition of the key negotiation template. If the matching condition is met, the device 2 synthesizes the IPSec key 4 based on the public key 4 and the private key 4. Otherwise, the device 2 does not synthesize the IPSec key 4. In a scenario in which IPSec aging periods of devices are consistent, after a key negotiation template is established for the first time, the foregoing determining operations are not mandatory because subsequent IPSec aging periods are consistent.

In a specific implementation, both the packet 3 and the packet 4 may be BGP messages or UDP packets. For details, refer to related descriptions about the public key and the indication information that are carried in the BGP message or the UDP packet in S106 in the embodiment shown in the method 100.

S301 to S303 may be performed at any moment after the device 1 enters the IPSec aging period 4. Similarly, S304 to S306 may be performed at any moment after the device 2 enters the IPSec aging period 3. S301 to S303 and S304 to S306 are not necessarily performed in a specific order. S303 is a specific implementation of S106. S306 is a specific implementation of S110.

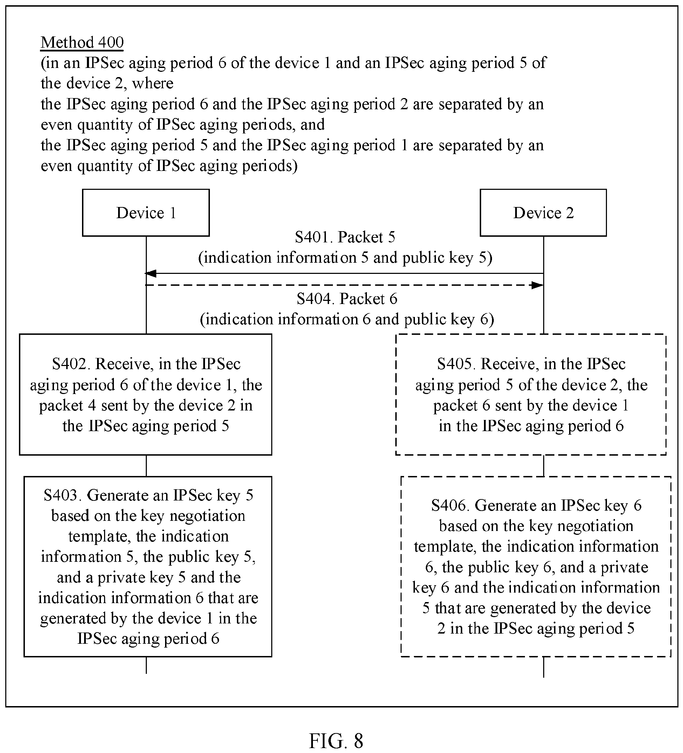

In still another example, in an IPSec aging period 6 of the device 1 and an IPSec aging period 5 of the device 2, where the IPSec aging period 6 and the IPSec aging period 2 are separated by an even quantity of IPSec aging periods, and the IPSec aging period 5 and the IPSec aging period 1 are also separated by an even quantity of IPSec aging periods, an embodiment of this application further provides a method 400 for secure communication. Referring to FIG. 8, for example, the method 400 may include the following steps.

S401. The device 2 sends a packet 5 to the device 1 in the IPSec aging period 5 of the device 2. The packet 5 carries indication information 5 and a public key 5, and the indication information 5 is used to indicate status information of a public-private key pair generated by the device 2 in the IPSec aging period 5.

S402. The device 1 receives, in the IPSec aging period 6 of the device 1, the packet 5 sent by the device 2 in the IPSec aging period 5.

S403. The device 1 generates an IPSec key 5 based on the key negotiation template, the indication information 5, the public key 5, and a private key 5 and indication information 6 that are generated by the device 1 in the IPSec aging period 6.

The method 400 may further include:
S404. The device 1 sends a packet 6 to the device 2 in the IPSec aging period 6 of the device 1. The packet 2 carries the indication information 6 and a public key 6, and the indication information 6 is used to indicate status information of a public-private key pair generated by the device 1 in the IPSec aging period 6.
S405. The device 2 receives, in the IPSec aging period 5 of the device 2, the packet 6 sent by the device 1 in the IPSec aging period 6.
S406. The device 2 generates an IPSec key 6 based on the key negotiation template, the indication information 6, the public key 6, and a private key 6 and the indication information 5 that are generated by the device 2 in the IPSec aging period 5. The IPSec key 6 generated in S406 is the same as the IPSec key 5 generated in S402.

Because IPSec updates are indicated by using alternate occurrences of indication information, the device generates a different piece of indication information after an even quantity of IPSec aging periods. Because the IPSec aging period 5 and the IPSec aging period 1 are separated by an even quantity of IPSec aging periods, and the IPSec aging period 6 and the IPSec aging period 2 are separated by an even quantity of IPSec aging periods, the indication information 5 and the indication information 1 are different, and the indication information 6 and the indication information 2 are different. Moreover, because the duration 1 and the duration 2 are equal, the quantities of IPSec aging periods of the separation are the same.

S403 may specifically include: The device 1 determines whether the indication information 5 and the indication information 6 meet the matching condition of the key negotiation template. If the matching condition is met, the device 1 synthesizes the IPSec key 5 based on the public key 5 and the private key 5. Otherwise, the device 1 does not synthesize the IPSec key 5. S306 may specifically include: The device 2 determines whether the indication information 5 and the indication information 6 meet the matching condition of the key negotiation template. If the matching condition is met, the device 2 synthesizes the IPSec key 6 based on the public key 6 and the private key 6. Otherwise, the device 2 does not synthesize the IPSec key 6. In a scenario in which IPSec aging periods of devices are consistent, after a key negotiation template is established for the first time, the foregoing determining operations are not mandatory because subsequent IPSec aging periods are consistent.

In a specific implementation, the packet 5 and the packet 6 may be BGP messages or UDP packets. For details, refer to related descriptions about the public key and the indication information that are carried in the BGP message or the UDP packet in S106 in the embodiment shown in the method 100.

S401 to S403 may be performed at any moment after the device 1 enters the IPSec aging period 6. Similarly, S404 to S406 may be performed at any moment after the device 2 enters the IPSec aging period 5. S401 to S403 and S404 to S406 are not necessarily performed in a specific order. S403 is a specific implementation of S106. S406 is a specific implementation of S110.

In a specific implementation, in an IPSec aging period (which may also be denoted as the first IPSec aging period) in which a key negotiation template is established, the method 200 may be performed; when the second IPSec aging period starts, the method 400 may be performed; when the third IPSec aging period starts, the method 300 may be performed; when the fourth IPSec aging period starts, the method 400 may be performed; when the fifth IPSec aging period starts, the method 300 may be performed; and so on. The method 300 and the method 400 are repeatedly performed, to obtain an IPSec key in each IPSec aging period.

For two devices whose IPSec aging periods have a same duration, an IPSec key corresponding to each IPSec aging period can be quickly and effectively generated by performing the method 200, the method 300, and the method 400, to provide a data basis for secure communication between the devices.

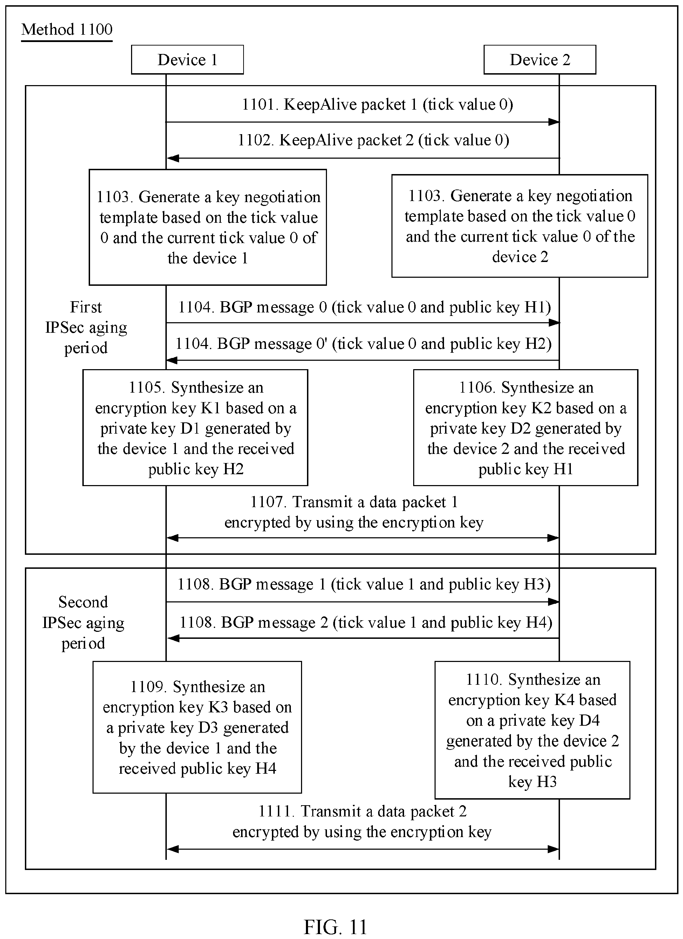

In the following embodiment shown in FIG. 11, how to implement the method 200, the method 300, and the method 400 in embodiments of this application is specifically described by using an example in which indication information is alternate tick values 0 and 1.

In some other possible implementations, each IPSec aging period of the device 1 has a duration 1, and each IPSec aging period of the device has a duration 2, but the duration 1 and the duration 2 are not equal.

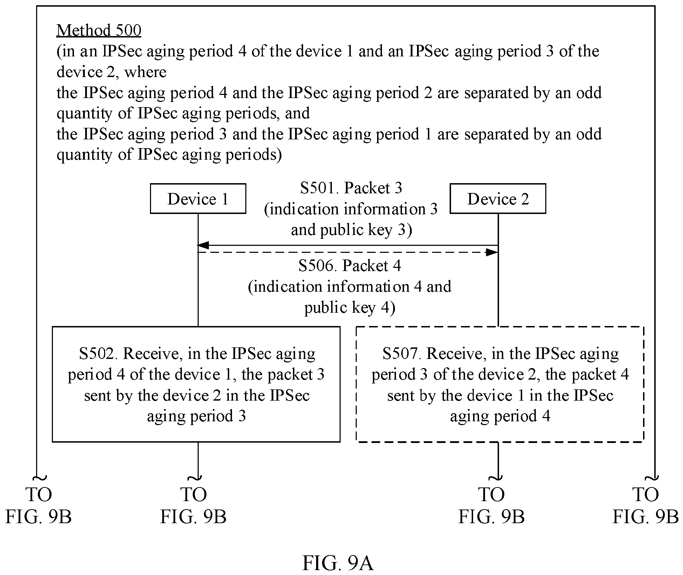

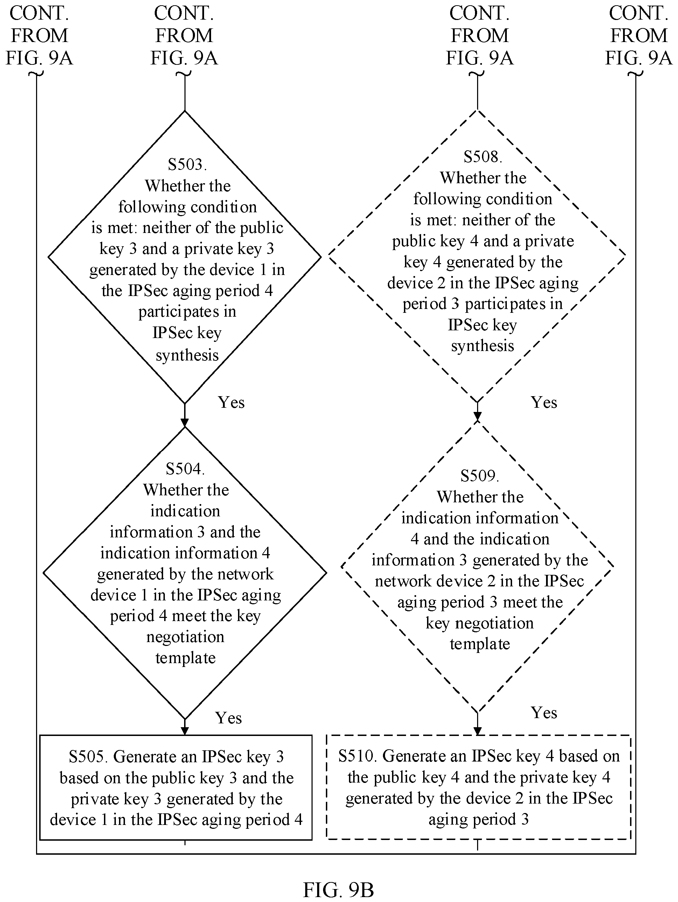

In an example, in an IPSec aging period 4 of the device 1 and an IPSec aging period 3 of the device 2, where the IPSec aging period 4 and the IPSec aging period 2 are separated by an odd quantity of IPSec aging periods, indication information 4 corresponding to the IPSec aging period 4 is the same as the indication information 2, the IPSec aging period 3 and the IPSec aging period 1 are also separated by an odd quantity of IPSec aging periods, and indication information 3 corresponding to the IPSec aging period 3 is the same as the indication information 1, an embodiment of this application further provides a method 500 for secure communication. Referring to FIG. 9A and FIG. 9B, for example, the method 500 may include the following steps.

S501. The device 2 sends a packet 3 to the device 1 in the IPSec aging period 3 of the device 2. The packet 3 carries the indication information 3 and a public key 3, and the indication information 3 is used to indicate status information of a public-private key pair generated by the device 2 in the IPSec aging period 3.

S502. The device 1 receives the packet 3 sent by the device 2 in the IPSec aging period 3.

S503. The device 1 determines whether a condition (which may also be referred to as a predetermined negotiation rule) is met. If the condition is met, S504 is performed.

The condition includes: neither of the public key 3 and a private key 3 generated by the device 1 in the IPSec aging period 4 participates in IPSec key synthesis.

S504. The device 1 determines whether the indication information 3 and the indication information 4 generated by the device 1 in the IPSec aging period 4 meet the matching condition of the key negotiation template. If the matching condition is met, S505 is performed.

S505. The device 1 generates an IPSec key 3 based on the public key 3 and the private key 3 generated by the device 1 in the IPSec aging period 4.

The method 500 may further include:
S506. The device 1 sends a packet 4 to the device 2 in the IPSec aging period 4 of the device 1. The packet 2 carries the indication information 4 and a public key 4, and the indication information 4 is used to indicate status information of a public-private key pair generated by the device 1 in the IPSec aging period 4.
S507. The device 2 receives the packet 4 sent by the device 1 in the IPSec aging period 4.
S508. The device 2 determines whether a condition is met. If the condition is met, S509 is performed.

The condition includes: neither of the public key 4 and a private key 4 generated by the device 2 in the IPSec aging period 3 participates in IPSec key synthesis.

S509. The device 2 determines whether the indication information 4 and the indication information 3 generated by the device 2 in the IPSec aging period 3 meet the matching condition of the key negotiation template. If the matching condition is met, S510 is performed.

S510. The device 2 generates an IPSec key 4 based on the public key 4 and the private key 4 generated by the device 2 in the IPSec aging period 3. The IPSec key 4 generated in S510 is the same as the IPSec key 3 generated in S505.

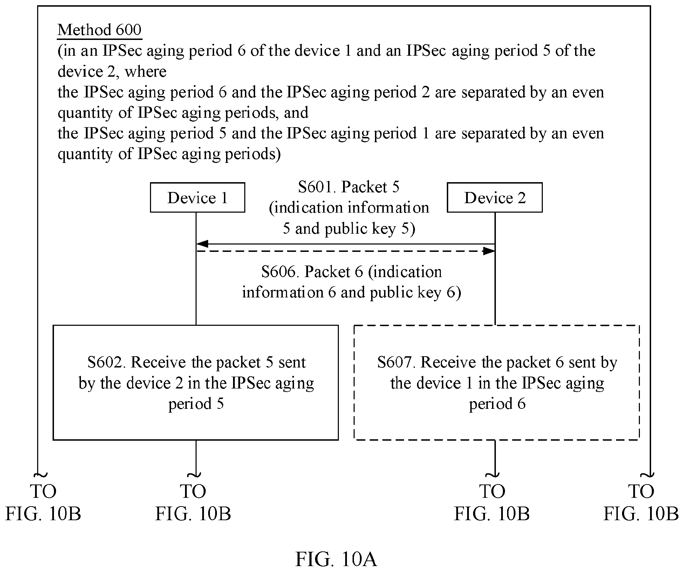

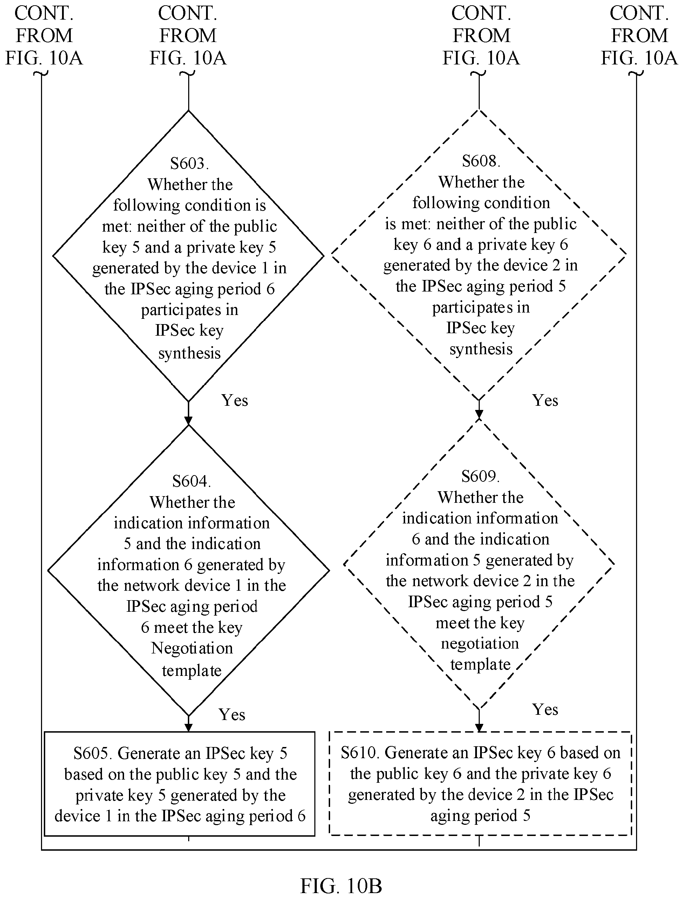

In another example, in an IPSec aging period 6 of the device 1 and an IPSec aging period 5 of the device 2, where the IPSec aging period 6 and the IPSec aging period 2 are separated by an even quantity of IPSec aging periods, indication information 6 corresponding to the IPSec aging period 6 is different from the indication information 2, the IPSec aging period 5 and the IPSec aging period 1 are also separated by an even quantity of IPSec aging periods, and indication information 5 corresponding to the IPSec aging period 5 is different from the indication information 1, an embodiment of this application further provides a method 600 for secure communication. Refer to FIG. 10A and FIG. 10B. For example, the method 600 may include the following steps.

S601. The device 2 sends a packet 5 to the device 1 in the IPSec aging period 5 of the device 2. The packet 5 carries the indication information 5 and a public key 5, and the indication information 5 is used to indicate status information of a public-private key pair generated by the device 2 in the IPSec aging period 5.

S602. The device 1 receives the packet 5 sent by the device 2 in the IPSec aging period 5.

S603. The device 1 determines whether a condition is met. If the condition is met, S604 is performed.

The condition includes: neither of the public key 5 and a private key 5 generated by the device 1 in the IPSec aging period 6 participates in IPSec key synthesis.

S604. The device 1 determines whether the indication information 5 and the indication information 6 generated by the device 1 in the IPSec aging period 6 meet the matching condition of the key negotiation template. If the matching condition is met, S605 is performed.

S605. The device 1 generates an IPSec key 5 based on the public key 5 and the private key 5 generated by the device 1 in the IPSec aging period 6.

The method 600 may further include:
S606. The device 1 sends a packet 6 to the device 2 in the IPSec aging period 6 of the device 1. The packet 2 carries the indication information 6 and a public key 6, and the indication information 6 is used to indicate status information of a public-private key pair generated by the device 1 in the IPSec aging period 6.
S607. The device 2 receives, in the IPSec aging period 5 of the device 2, the packet 6 sent by the device 1 in the IPSec aging period 6.
S608. The device 2 determines whether a condition is met. If the condition is met, S609 is performed.

The condition includes: neither of the public key 6 and a private key 6 generated by the device 2 in the IPSec aging period 5 participates in IPSec key synthesis.

S609. The device 2 determines whether the indication information 6 and the indication information 5 generated by the device 2 in the IPSec aging period 5 meet the matching condition of the key negotiation template. If the matching condition is met, S610 is performed.

S610. The device 2 generates an IPSec key 6 based on the public key 6 and the private key 6 generated by the device 2 in the IPSec aging period 5. The IPSec key 6 generated in S610 is the same as the IPSec key 5 generated in S605.

In a specific implementation, in an IPSec aging period (which may also be denoted as the first IPSec aging period) in which a key negotiation template is established, the method 200 may be performed; when a device with a longer IPSec aging period enters the second IPSec aging period, the method 600 may be performed; when the device with the longer IPSec aging period enters the third IPSec aging period, the method 500 may be performed; when the device with the longer IPSec aging period enters the fourth IPSec aging period, the method 600 may be performed; when the device with the longer IPSec aging period enters the fifth IPSec aging period, the method 500 may be performed; and so on. The method 500 and the method 600 are repeatedly performed, to obtain an IPSec key in each IPSec aging period.

For two devices whose IPSec aging periods have different durations, an IPSec key corresponding to each IPSec aging period can be quickly and effectively generated by performing the method 200, the method 500, and the method 600, to provide a data basis for secure communication between the devices.

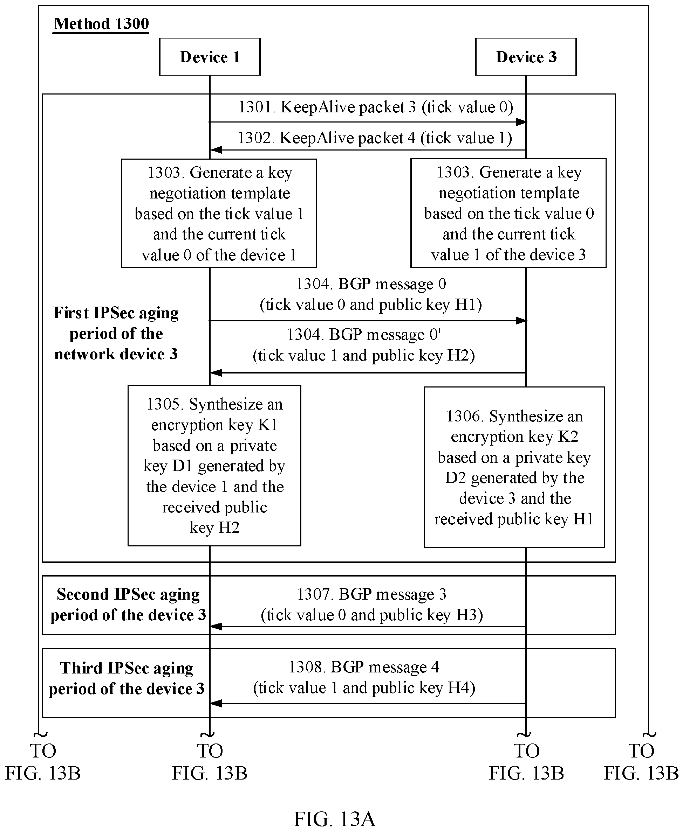

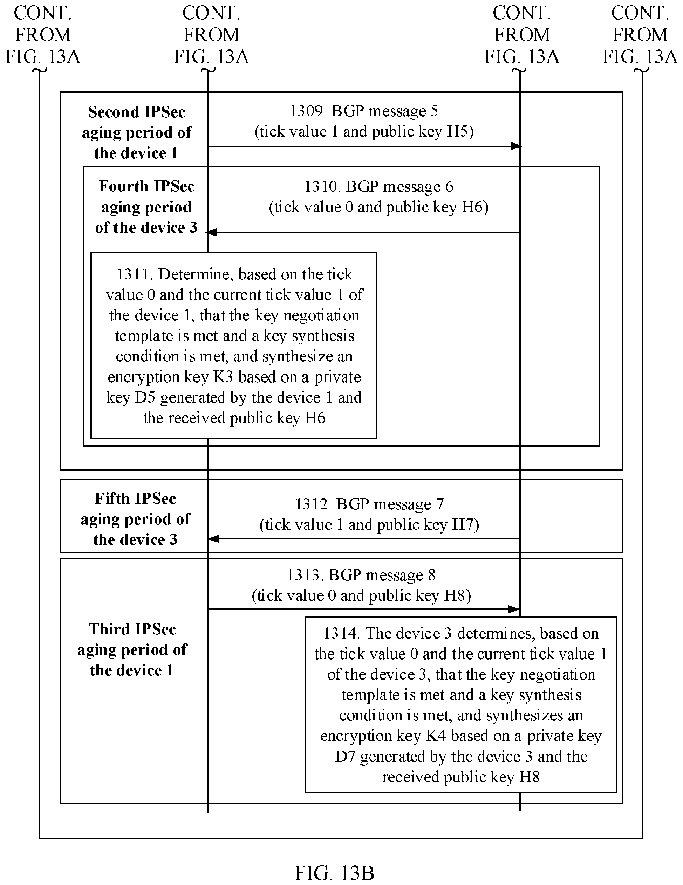

In the following embodiment shown in FIG. 13A and FIG. 13B, how to implement the method 200, the method 500, and the method 600 in embodiments of this application is described by using an example in which indication information is alternate tick values 0 and 1.

To describe embodiments of this application more clearly and specifically, for example, the indication information is a tick value and the IPSec key is an encryption key, and the IPSec key negotiation process in embodiments of this application is specifically described below with reference to FIG. 11, and FIG. 13A and FIG. 13B by using two examples.

In this scenario, a device 1 and a device 2 are communication peers, and the device 1 and a device 3 are also communication peers. It is assumed that IPSec aging periods of the device 1 and the device 2 has a duration of 24 hours, and an IPSec aging period of the device 3 has a duration of 10 hours. Starting from connection establishment, tick values 0 and 1 of the device 1 and 2 alternate, and tick values 1 and 0 of the device 3 alternate. The following example 1 describes IPSec key negotiation between the device 1 and the device 2 in the first two IPSec aging periods, and the following example 2 describes IPSec key negotiation between the device 1 and the device 3 in the first two IPSec aging periods.

Example 1: Referring to FIG. 11, an IPSec key negotiation method 1100 may include a process of obtaining an IPSec key in the first IPSec aging period and a process of obtaining an IPSec key in the second IPSec aging period.

The process of obtaining an IPSec key in the first IPSec aging period includes the following steps.

S1101. The device 1 sends a KeepAlive packet 1 to the device 2. The KeepAlive packet 1 carries the tick value 0.

S1102. The device 2 sends a KeepAlive packet 2 to the device 1. The KeepAlive packet 2 carries the tick value 0.

S1103. The device 1 generates a key negotiation template based on the tick value 0 and the current tick value 0 of the device 1. The device 2 generates a key negotiation template based on the tick value 0 and the current tick value 0 of the device 2.

S1104. The device 1 sends a BGP message 0 to the device 2. The BGP message 0 carries the tick value 0 and a public key H1 in the first IPSec aging period. The device 2 sends a BGP message 0' to the device 1. The BGP message 0' carries the tick value 0 and a public key H2 in the first IPSec aging period.

S1105. The device 1 synthesizes an encryption key K1 based on a private key D1 generated by the device 1 and the received public key H2.

S1106. The device 2 synthesizes an encryption key K2 based on a private key D2 generated by the device 2 and the received public key H1.

K1 and K2 are the same.

S1107. A data packet 1 encrypted by using the encryption key is transmitted between the device 1 and the device 2.

After the first IPSec aging period lasts 24 hours, the second IPSec aging period starts, and a new IPSec key needs to be determined through negotiation. For example, a process of negotiating an IPSec key in the second IPSec aging period may include:

S1108. The device 1 sends a BGP message 1 to the device 2. The BGP message 1 carries the tick value 1 and a public key H3. The device 2 sends a BGP message 2 to the device 1. The BGP message 2 carries the tick value 1 and a public key H4.

S 1109. The device 1 synthesizes an encryption key K3 based on a private key D3 generated by the device 1 and the received public key H4.

S1110. The device 2 synthesizes an encryption key K4 based on a private key D4 generated by the device 2 and the received public key H3.

K3 and K4 are the same.

S1111. A data packet 2 encrypted by using the encryption key is transmitted between the device 1 and the device 2.

In a specific implementation, after S1108 and before S1109, the method may further include: The device 1 determines, based on the received tick value 1 and the current tick value 1 of the device 1, that a matching condition of the key negotiation template is met, and then performs S1109.

In a specific implementation, in S1111, the data packet 2 on which security protection is performed by using K3 or K4 may also be transmitted between the device 1 and the device 2.

In this way, when IPSec aging periods of two devices have a same duration and update periods are consistent, a key negotiation template may be established before IPSec key negotiation, and when an IPSec key needs to be negotiated, the IPSec key is quickly and efficiently negotiated based on the key negotiation template, so that secure and quick packet transmission may be performed based on IPSec in a network.

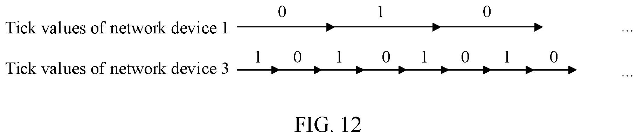

Example 2: FIG. 12 is a diagram of a relationship between IPSec aging periods of the device 1 and the device 3. Referring to FIG. 13A and FIG. 13B, an IPSec key negotiation method 1300 includes a process of obtaining an IPSec key in the first IPSec aging period of the device 1 and a process of obtaining an IPSec key in the second IPSec aging period. The method 1300 includes the following steps.

S1301. The device 1 sends a KeepAlive packet 3 to the device 3. The KeepAlive packet 3 carries the tick value 0.

S1302. The device 3 sends a KeepAlive packet 4 to the device 1. The KeepAlive packet 4 carries the tick value 1.

S1303. The device 1 generates a key negotiation template based on the tick value 1 and the current tick value 0 of the device 1. The device 3 generates a key negotiation template based on the tick value 0 and the current tick value 1 of the device 3.

S1304. The device 1 sends a BGP message 0 to the device 3. The BGP message 0 carries the tick value 0 and a public key H1 in the first IPSec aging period. The device 3 sends a BGP message 0' to the device 1. The BGP message 0' carries the tick value 1 and a public key H2 in the first IPSec aging period.

S1305. The device 1 synthesizes an encryption key K1 based on a private key D1 generated by the device 1 and the received public key H2.

S1306. The device 3 synthesizes an encryption key K2 based on a private key D2 generated by the device 3 and the received public key H1.

K1 and K2 are the same.

In a specific implementation, it should be noted that, after S1306, BGP messages and data packets exchanged between the device 1 and the device 3 may all be encrypted by using the encryption key K1 or K2 to implement security protection.

After the first IPSec aging period of the device 3 lasts 10 hours, the second IPSec aging period of the device 3 starts. This embodiment of this application includes:

S1307. The device 3 sends a BGP message 3 to the device 1. The BGP message 3 carries the tick value 0 and a public key H3.

Because the cross key negotiation template is not met currently, and the private key D1 of the device 1 has participated in IPSec key synthesis, the device 1 does not synthesize a new IPSec key, and still uses K1 or K2 as a shared encryption key.

After the second IPSec aging period of the device 3 lasts 10 hours, the third IPSec aging period of the device 3 starts. In this case, this embodiment of this application includes:
S1308. The device 3 sends a BGP message 4 to the device 1. The BGP message 4 carries the tick value 1 and a public key H4.

Although the cross key negotiation template is met, because the private key D1 of the device 1 has participated in IPSec key synthesis, the device 1 still does not synthesize a new IPSec key, but still uses K1 or K2 as a shared IPSec key.

After the first IPSec aging period of the device 1 lasts 24 hours, the third IPSec aging period of the device 3 has lasted 4 hours, and the second IPSec aging period of the device 1 starts. For example, a process of obtaining an IPSec key may include:
S1309. The device 1 sends a BGP message 5 to the device 3. The BGP message 5 carries the tick value 1 and a public key H5.

Although the private key D4 of the device 3 has not participated in IPSec key synthesis, because the cross key negotiation template is met, the device 3 does not synthesize a new IPSec key, but still uses K1 or K2 as a shared encryption key.

After the third IPSec aging period of the device 3 lasts 10 hours, the fourth IPSec aging period of the device 3 starts. In this case, this embodiment of this application includes:
S1310. The device 3 sends a BGP message 6 to the device 1. The BGP message 6 carries the tick value 0 and a public key H6.
S1311. The device 1 determines, based on the tick value 0 and the current tick value 1 of the device 1, that the key negotiation template is met and a key synthesis condition is met, and synthesizes an encryption key K3 based on a private key D5 generated by the device 1 and the received public key H6.

The key synthesis condition (that is, the "condition" in the foregoing embodiment, which may also be referred to as a predetermined negotiation rule) may specifically include: the private key D5 is a latest private key generated by the device 1, the public key H6 is a latest public key received from the device 3, and neither of the private key D5 and the public key H6 participates in encryption key synthesis.

After the fourth IPSec aging period of the device 3 lasts 10 hours, the fifth IPSec aging period of the device 3 starts. This embodiment of this application includes:
S1312. The device 3 sends a BGP message 7 to the device 1. The BGP message 7 carries the tick value 1 and a public key H7.

Because the cross key negotiation template is not met, and the private key D5 of the device 1 has participated in IPSec key synthesis, the device 1 does not synthesize a new IPSec key, and still uses K1 or K2 as a shared encryption key, or still uses K3 as a shared encryption key.

After the second IPSec aging period of the device 1 lasts 24 hours, the fifth IPSec aging period of the device 3 has lasted 8 hours, and the third IPSec aging period of the device 1 starts. For example, a process of negotiating an IPSec key may include:
S1313. The device 1 sends a BGP message 8 to the device 3. The BGP message 8 carries the tick value 0 and a public key H8.
S1314. The device 3 determines, based on the tick value 0 and the current tick value 1 of the device 3, that the key negotiation template is met and a key synthesis condition is met, and synthesizes an encryption key K4 based on a private key D7 generated by the device 3 and the received public key H8.

The key synthesis condition may specifically include: the private key D7 is a latest private key generated by the device 3, the public key H8 is a latest public key received from the device 1, and neither of the private key D7 and the public key H8 participates in encryption key synthesis.

It may be understood that, in the remaining two hours of the fifth IPSec aging period of the device 3, a data packet 3 on which security protection is performed by using any encryption key of K1, K2, K3, or K4 is transmitted between the device 1 and the device 3.

In this way, when IPSec aging periods of two devices have different durations, a key negotiation template may be established before IPSec key negotiation, and when an IPSec key needs to be negotiated, the IPSec key is quickly and efficiently negotiated based on the key negotiation template, so that secure and quick data transmission may be performed based on IPSec in a network.

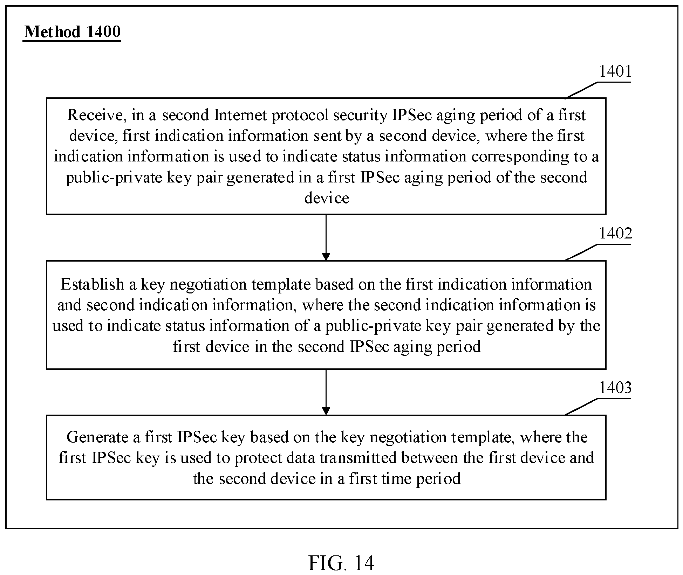

FIG. 14 is a schematic flowchart of a method 1400 for secure communication according to an embodiment of this application. The method 1400 is applied to a scenario including a first device and a second device, and performed by the first device. For example, the method 1400 for secure communication may include the following steps.

Step 1401: Receive, in a second Internet protocol security IPSec aging period of the first device, first indication information sent by the second device, where the first indication information is used to indicate status information corresponding to a public-private key pair generated in a first IPSec aging period of the second device.

Step 1402: Establish a key negotiation template based on the first indication information and second indication information, where the second indication information is used to indicate status information of a public-private key pair generated by the first device in the second IPSec aging period.

Step 1403: Generate a first IPSec key based on the key negotiation template, where the first IPSec key is used to protect data transmitted between the first device and the second device in a first time period.

In an example, the first device may be the device 1 in the method 100, and the second device may be the device 2 in the method 100. In this case, the first indication information may be the indication information 1 in the method 100, the second indication information is the indication information 2 in the method 100, the second IPSec aging period is the IPSec aging period 2, the first IPSec aging period is the IPSec aging period 1, and the first IPSec key is the IPSec key 1.

In another example, the first device may be the device 2 in the method 100, and the second device may be the device 1 in the method 100. In this case, the first indication information may be the indication information 2 in the method 100, the second indication information is the indication information 1 in the method 100, the second IPSec aging period is the IPSec aging period 1, the first IPSec aging period is the IPSec aging period 2, and the first IPSec key is the IPSec key 1.

The first indication information is the same as the second indication information, and the key negotiation template is a parallel key negotiation template. Alternatively, the first indication information is different from the second indication information, and the key negotiation template is a cross key negotiation template.

In some possible implementations, S1401 of "receiving first indication information sent by the second device" in this embodiment of this application may include: receiving a keepalive (KeepAlive) packet or a bidirectional forwarding detection BFD packet sent by the second device. The first indication information is carried in the KeepAlive packet or the BFD packet.

In some other possible implementations, the method 1400 further includes: receiving, in a fourth IPSec aging period of the first device, a first packet sent by the second device in a third IPSec aging period. The first packet carries third indication information and a first public key generated by the second device in the third IPSec aging period, and the third indication information is used to indicate status information corresponding to the first public key. The third IPSec aging period is the first IPSec aging period, or the third IPSec aging period and the first IPSec aging period are separated by N aging periods, and N is a positive odd number. The third indication information is the same as the first indication information. In this case, S1403 of "generating a first IPSec key based on the key negotiation template" in the method 1400 may include: generating the first IPSec key based on the key negotiation template, the third indication information, the first public key, and a first private key and fourth indication information that are generated by the first device in the fourth IPSec aging period. The fourth indication information is used to indicate the fourth IPSec aging period. The fourth IPSec aging period is the second IPSec aging period, or the fourth IPSec aging period and the second IPSec aging period are separated by M aging periods, and M is a positive odd number. The fourth indication information is the same as the second indication information.

It should be noted that, when the method 1400 is used to implement the method 200 corresponding to FIG. 6, the method 300 corresponding to FIG. 7, or the method 500 corresponding to FIG. 9A and FIG. 9B, the first device may be, for example, the device 1 in the foregoing method embodiment, and the second device is the device 2 in the foregoing method embodiment. In this case, the third indication information is the indication information 3, the fourth indication information is the indication information 4, the third IPSec aging period is the IPSec aging period 3, the fourth IPSec aging period is the IPSec aging period 4, and the first packet is the packet 1 or the packet 3 in the foregoing method embodiment. Alternatively, the first device may be, for example, the device 2 in the method 200, 300, or 500, and the second device is the corresponding device 1. In this case, the third indication information is the indication information 4, the fourth indication information is the indication information 3, the third IPSec aging period is the IPSec aging period 4, the fourth IPSec aging period is the IPSec aging period 3, and the first packet is the packet 2 or the packet 4 in the foregoing method embodiment.

It may be understood that, for related descriptions and achieved effects of the implementation, refer to related descriptions in the method 200, the method 300, or the method 500. Specifically, when each IPSec aging period of the first device has a first duration, each IPSec aging period of the second device has a second duration, and the first duration and the second duration are equal, refer to the method 200 or the method 300 for the implementation. When the first duration and the second duration are not equal, refer to the method 500. The generating a first IPSec key in S1403 is specifically: generating the first IPSec key when the following condition is met. The condition includes: neither of the first public key and the first private key that participate in generating the first IPSec key participates in generating another IPSec key other than the first IPSec key.

In still some other possible implementations, the method 1400 may further include: receiving, in a sixth IPSec aging period of the first device, a second packet sent by the second device, where the second packet carries a second public key and fifth indication information that are generated by the second device in a fifth IPSec aging period, the fifth indication information indicates status information corresponding to the second public key, and the fifth IPSec aging period and the first IPSec aging period are separated by an even quantity of IPSec aging periods; and generating a second IPSec key based on the key negotiation template, the second public key, the fifth indication information, and a second private key and sixth indication information that are generated by the first device in the sixth IPSec aging period, where the sixth indication information is used to indicate status information corresponding to the second private key, the second IPSec key is used to protect data transmitted between the first device and the second device in a second time period, and the sixth IPSec aging period and the second IPSec aging period are separated by an even quantity of IPSec aging periods.

It should be noted that, when the method 1400 is used to implement the method 400 corresponding to FIG. 8 or the method 600 corresponding to FIG. 10A and FIG. 10B, the first device may be, for example, the device 1 in the foregoing method embodiment, and the second device is the device 2 in the foregoing method embodiment. In this case, the fifth indication information is the indication information 5, the sixth indication information is the indication information 6, the fifth IPSec aging period is the IPSec aging period 5, the sixth IPSec aging period is the IPSec aging period 6, and the second packet is the packet 5 in the foregoing method embodiment. Alternatively, the first device may be, for example, the device 2 in the foregoing method embodiment, and the second device is the device 1 in the foregoing method embodiment. In this case, the fifth indication information is the indication information 6, the sixth indication information is the indication information 5, the fifth IPSec aging period is the IPSec aging period 6, the sixth IPSec aging period is the IPSec aging period 5, and the second packet is the packet 6 in the foregoing method embodiment.

It may be understood that, for related descriptions and achieved effects of the implementation, refer to related descriptions in the method 400 or the method 600. Specifically, when each IPSec aging period of the first device has a first duration, each IPSec aging period of the second device has a second duration, and the first duration and the second duration are equal, refer to the method 400 for the implementation. When the first duration and the second duration are not equal, refer to the method 600. The "generating a second IPSec key" is specifically: generating the second IPSec key when the following condition is met. The condition includes: neither of the second public key and the second private key that participate in generating the second IPSec key participates in generating another IPSec key other than the second IPSec key.

It may be understood that the first packet and the second packet may further include at least one of the following security parameters: a DH group, an encapsulation mode, an encryption algorithm, and an authentication algorithm.

It may be understood that both the first packet and the second packet may be border gateway protocol BGP messages or user datagram protocol UDP packets.

The first IPSec key in the method 1400 may be an encryption key or an authentication key, and the second IPSec key may also be an encryption key or an authentication key.

It should be noted that, for a specific implementation and an achieved effect of the method 1400 in this embodiment of this application, refer to related descriptions in embodiments shown in FIG. 2, FIG. 6 to FIG. 11, and FIG. 13A and FIG. 13B.

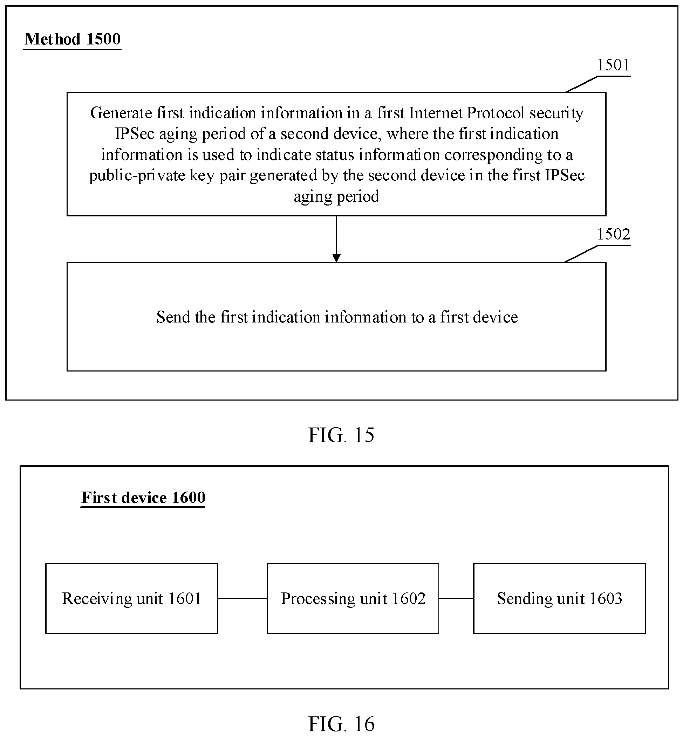

FIG. 15 is a schematic flowchart of another method 1500 for secure communication according to an embodiment of this application. The method 1500 is applied to a scenario including a first device and a second device, and performed by the second device. For example, the method 1500 for secure communication may include the following steps.

S1501. Generate first indication information in a first Internet protocol security IPSec aging period of the second device, where the first indication information is used to indicate status information corresponding to a public-private key pair generated by the second device in the first IPSec aging period.

S1502. Send the first indication information to the first device.

It may be understood that, the first device may be the device 1 in the method 100, and the second device may be the device 2 in the method 100. In this case, the first indication information may be the indication information 1 in the method 100, and the first IPSec aging period is the IPSec aging period 1. Alternatively, the first device may be the device 2 in the method 100, and the second device is the device 1 in the method 100. In this case, the first indication information may be the indication information 2 in the method 100, and the first IPSec aging period is the IPSec aging period 2.

In some possible implementations, S1501 of "sending the first indication information to the first device" in this embodiment of this application may include: sending a keepalive (KeepAlive) packet or a bidirectional forwarding detection BFD packet to the first device. The first indication information is carried in the KeepAlive packet or the BFD packet.

In some other possible implementations, the method 1500 further includes: receiving, in the first IPSec aging period, second indication information sent by the first device, where the second indication information is used to indicate status information corresponding to a public-private key pair generated by the first device in a second IPSec aging period; establishing a key negotiation template based on the second indication information and the first indication information; and generating a first IPSec key based on the key negotiation template, where the first IPSec key is used to protect data transmitted between the first device and the second device in a first time period. The first indication information is the same as the second indication information, and the key negotiation template is a parallel key negotiation template. Alternatively, the first indication information is different from the second indication information, and the key negotiation template is a cross key negotiation template.

It may be understood that, when the method 1500 is used to implement the method 100 corresponding to FIG. 2, the first device may be, for example, the device 1 in the method 100, and the second device may be the device 2 in the method 100. In this case, the first indication information may be the indication information 1 in the method 100, the second indication information is the indication information 2 in the method 100, the second IPSec aging period is the IPSec aging period 2, the first IPSec aging period is the IPSec aging period 1, and the first IPSec key is the IPSec key 1. When the first device may be the device 2 in the method 100, the second device may be the device 1 in the method 100. In this case, the first indication information may be the indication information 2 in the method 100, the second indication information is the indication information 1 in the method 100, the second IPSec aging period is the IPSec aging period 1, the first IPSec aging period is the IPSec aging period 2, and the first IPSec key is the IPSec key 1.

In still some other possible implementations, the method 1500 further includes: sending a first packet to the first device in a third IPSec aging period of the second device. The first packet carries third indication information and a first public key generated by the second device in the third IPSec aging period, and the third indication information is used to indicate status information corresponding to the first public key. The third IPSec aging period is the first IPSec aging period, or the third IPSec aging period and the first IPSec aging period are separated by N aging periods, and N is a positive odd number. The third indication information is the same as the first indication information.

In this implementation, the "generating a first IPSec key based on the key negotiation template" may include: receiving, in the third IPSec aging period of the second device, a second packet sent by the first device, where the second packet carries a second public key and fourth indication information that are generated by the first device in a fourth IPSec aging period, the fourth indication information indicates status information corresponding to the second public key, the fourth IPSec aging period is the second IPSec aging period, or the fourth IPSec aging period and the second IPSec aging period are separated by M aging periods and M is a positive odd number, and the fourth indication information is the same as the second indication information; and generating the first IPSec key based on the key negotiation template, the fourth indication information, the second public key, and the third indication information and a first private key that are generated by the second device in the third IPSec aging period.

When the method 1500 is used to implement the method 200 corresponding to FIG. 6, the method 300 corresponding to FIG. 7, or the method 500 corresponding to FIG. 9A and FIG. 9B, the first device may be, for example, the device 1 in the foregoing method embodiment, and the second device is the device 2 in the foregoing method embodiment. In this case, the third indication information is the indication information 3, the fourth indication information is the indication information 4, the third IPSec aging period is the IPSec aging period 3, the fourth IPSec aging period is the IPSec aging period 4, the first packet is the packet 1 or the packet 3 in the foregoing method embodiment, and the second packet is the packet 2 or the packet 4 in the foregoing method embodiment. Alternatively, the first device may be, for example, the device 2 in the foregoing method embodiment, and the second device is the device 1 in the foregoing method embodiment. In this case, the third indication information is the indication information 4, the fourth indication information is the indication information 3, the third IPSec aging period is the IPSec aging period 4, the fourth IPSec aging period is the IPSec aging period 3, the first packet is the packet 2 or the packet 4 in the foregoing method embodiment, and the second packet is the packet 1 or the packet 3 in the foregoing method embodiment.

It may be understood that, for related descriptions and achieved effects of the implementation, refer to related descriptions in the method 200, the method 300, or the method 500. Specifically, when each IPSec aging period of the first device has a first duration, each IPSec aging period of the second device has a second duration, and the first duration and the second duration are equal, refer to the method 200 or the method 300 for the implementation. When the first duration and the second duration are not equal, refer to the method 500. The "generating a first IPSec key" is specifically: generating the first IPSec key when the following condition is met. The condition includes: neither of the second public key and the first private key that participate in generating the first IPSec key participates in generating another IPSec key other than the first IPSec key.

In yet some other possible implementations, the method 1500 further includes: sending a third packet to the first device in a fifth IPSec aging period of the second device. The third packet carries a third public key and fifth indication information that are generated by the second device in the fifth IPSec aging period, the fifth indication information indicates status information corresponding to the third public key, and the fifth IPSec aging period and the first IPSec aging period are separated by an even quantity of IPSec aging periods. Moreover, the method 1500 further includes: receiving, in the fifth IPSec aging period of the second device, a fourth packet sent by the first device, where the fourth packet carries a fourth public key and sixth indication information that are generated by the first device in a sixth IPSec aging period, the sixth indication information indicates status information corresponding to the fourth public key, the sixth IPSec aging period and the second IPSec aging period are separated by an even quantity of IPSec aging periods, and the fifth IPSec aging period and the first IPSec aging period are separated by an even quantity of IPSec aging periods; and generating a second IPSec key based on the key negotiation template, the fourth public key, the sixth indication information, and a second private key and the fifth indication information that are generated by the second device in the fifth IPSec aging period, where the third indication information indicates fifth IPSec aging period.

It should be noted that, when the method 1500 is used to implement the method 400 corresponding to FIG. 8 or the method 600 corresponding to FIG. 10A and FIG. 10B, the first device may be, for example, the device 1 in the foregoing method embodiment, and the second device is the device 2 in the foregoing method embodiment. In this case, the fifth indication information is the indication information 5, the sixth indication information is the indication information 6, the fifth IPSec aging period is the IPSec aging period 5, the sixth IPSec aging period is the IPSec aging period 6, the third packet is the packet 5 in the foregoing method embodiment, and the fourth packet is the packet 6 in the foregoing method embodiment. Alternatively, the first device may be, for example, the device 2 in the foregoing method embodiment, and the second device is the device 1 in the foregoing method embodiment. In this case, the fifth indication information is the indication information 6, the sixth indication information is the indication information 5, the fifth IPSec aging period is the IPSec aging period 6, the sixth IPSec aging period is the IPSec aging period 5, the third packet is the packet 6 in the foregoing method embodiment, and the fourth packet is the packet 5 in the foregoing method embodiment.

It may be understood that, for related descriptions and achieved effects of the implementation, refer to related descriptions in the method 400 or the method 600. Specifically, when each IPSec aging period of the first device has a first duration, each IPSec aging period of the second device has a second duration, and the first duration and the second duration are equal, refer to the method 400 for the implementation. When the first duration and the second duration are not equal, refer to the method 600. The "generating a second IPSec key" is specifically: generating the second IPSec key when the following condition is met. The condition includes: neither of the fourth public key and the second private key that participate in generating the second IPSec key participates in generating another IPSec key other than the second IPSec key.

It may be understood that the first packet and the third packet may further include at least one of the following security parameters of the second device: a DH group, an encapsulation mode, an encryption algorithm, and an authentication algorithm. The second packet and the fourth packet may further include at least one of the following security parameters of the first device: a DH group, an encapsulation mode, an encryption algorithm, and an authentication algorithm.

It may be understood that the first packet to the fourth packet may all be border gateway protocol BGP messages or user datagram protocol UDP packets.

The first IPSec key in the method 1500 may be an encryption key or an authentication key, and the second IPSec key may also be an encryption key or an authentication key.

It should be noted that, for a specific implementation and an achieved effect of the method 1500 in this embodiment of this application, refer to related descriptions in embodiments shown in FIG. 2, FIG. 6 to FIG. 11, and FIG. 13A and FIG. 13B.

In addition, an embodiment of this application further provides a first device 1600, as shown in FIG. 16. The first device 1600 includes a receiving unit 1601, a processing unit 1602, and a sending unit 1603. The receiving unit 1601 is configured to perform receiving operations performed by the device 1 in embodiments shown in FIG. 2, FIG. 6 to FIG. 11, and FIG. 13A and FIG. 13B, and receiving operations in the embodiment shown in FIG. 14. The sending unit 1603 is configured to perform sending operations performed by the device 1 in embodiments shown in FIG. 2, FIG. 6 to FIG. 11, and FIG. 13A and FIG. 13B, and sending operations in the embodiment shown in FIG. 14. The processing unit 1602 is configured to perform other operations other than the receiving operations and the sending operations performed by the device 1 in embodiments shown in FIG. 2, FIG. 6 to FIG. 11, and FIG. 13A and FIG. 13B, and other operations other than the receiving operations and the sending operations in the embodiment shown in FIG. 14. For example, the processing unit 1602 may perform the operation in the embodiment in FIG. 2: the device 1 establishes a key negotiation template based on the indication information 1 and the indication information 2.

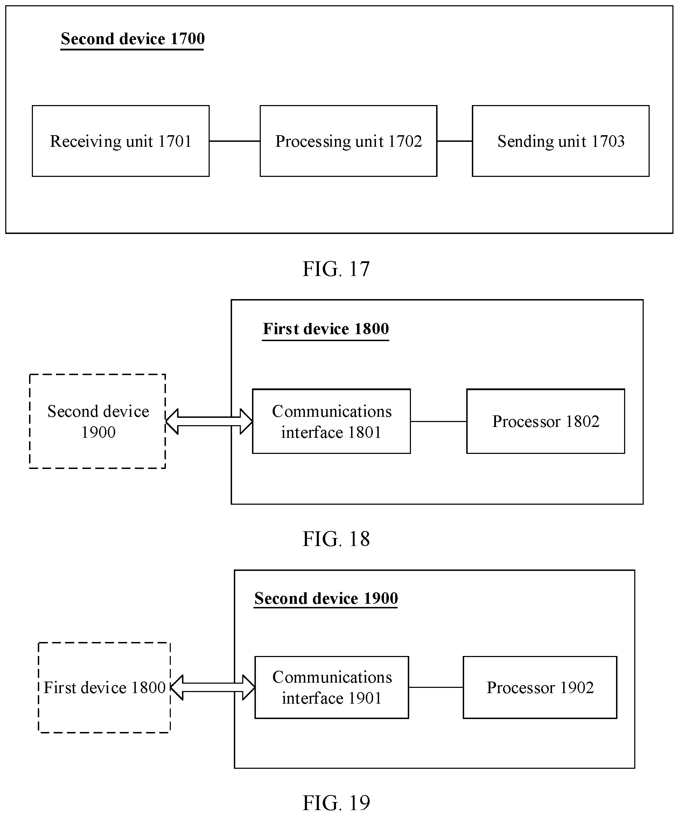

In addition, an embodiment of this application further provides a second device 1700, as shown in FIG. 17. The second device 1700 includes a receiving unit 1701, a processing unit 1702, and a sending unit 1703. The receiving unit 1701 is configured to perform receiving operations performed by the device 2 in embodiments shown in FIG. 2 and FIG. 6 to FIG. 11, receiving operations performed by the device 3 in the embodiment shown in FIG. 13A and FIG. 13B, and receiving operations in the embodiment shown in FIG. 15. The sending unit 1703 is configured to perform sending operations performed by the device 2 in embodiments shown in FIG. 2 and FIG. 6 to FIG. 11, sending operations performed by the device 3 in the embodiment shown in FIG. 13A and FIG. 13B, and sending operations in the embodiment shown in FIG. 15. The processing unit 1702 is configured to perform other operations other than the receiving operations and the sending operations performed by the device 2 in embodiments shown in FIG. 2 and FIG. 6 to FIG. 11, and other operations other than the receiving operations and the sending operations performed by the device 3 in the embodiment shown in FIG. 13A and FIG. 13B, and other operations other than the receiving operations and the sending operations in the embodiment shown in FIG. 15. For example, the processing unit 1702 may perform the operation in the embodiment in FIG. 2: the device 2 generates indication information 1 in an IPSec aging period 1 of the device 2, where the indication information 1 is used to indicate the IPSec aging period 1.

In addition, an embodiment of this application further provides a first device 1800, as shown in FIG. 18. The first device 1800 includes a communications interface 1801 and a processor 1802 connected to the communications interface 1801. The communications interface 1801 is configured to perform receiving operations and sending operations performed by the device 1 in embodiments shown in FIG. 2, FIG. 6 to FIG. 11, and FIG. 13A and FIG. 13B, and receiving operations and sending operations in the embodiment shown in FIG. 14. The processor 1802 is configured to perform other operations other than the receiving operations and the sending operations performed by the device 1 in embodiments shown in FIG. 2, FIG. 6 to FIG. 11, and FIG. 13A and FIG. 13B, and other operations other than the receiving operations and the sending operations in the embodiment shown in FIG. 14. For example, the processor 1802 may perform the operation in the embodiment in FIG. 2: the device 1 establishes a key negotiation template based on the indication information 1 and the indication information 2.

In addition, an embodiment of this application further provides a second device 1900, as shown in FIG. 19. The second device 1900 includes a communications interface 1901 and a processor 1902 connected to the communications interface 1901. The communications interface 1901 is configured to perform receiving operations and sending operations performed by the device 2 in embodiments shown in FIG. 2 and FIG. 6 to FIG. 11, and receiving operations and sending operations performed by the device 3 in the embodiment shown in FIG. 13A and FIG. 13B, and receiving operations and sending operations in the embodiment shown in FIG. 15. The processor 1902 is configured to perform other operations other than the receiving operations and the sending operations performed by the device 2 in embodiments shown in FIG. 2 and FIG. 6 to FIG. 11, and other operations other than the receiving operations and the sending operations performed by the device 3 in the embodiment shown in FIG. 13A and FIG. 13B, and other operations other than the receiving operations and the sending operations in the embodiment shown in FIG. 15. For example, the processor 1902 may perform the operation in the embodiment in FIG. 2: the device 2 generates indication information 1 in an IPSec aging period 1 of the device 2, where the indication information 1 is used to indicate the IPSec aging period 1.

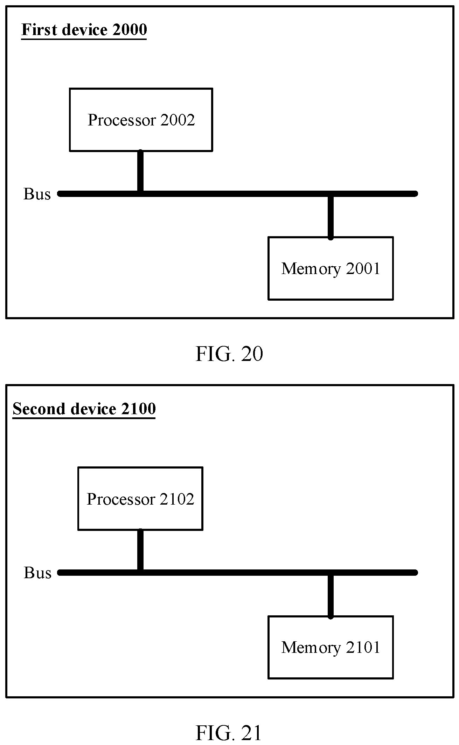

In addition, an embodiment of this application further provides a first device 2000, as shown in FIG. 20. The first device 2000 includes a memory 2001 and a processor 2002. The memory 2001 is configured to store program code. The processor 2002 is configured to run instructions in the program code, to enable the first device 2000 to perform the method performed on the device 1 side in embodiments shown in FIG. 2, FIG. 6 to FIG. 11, and FIG. 13A and FIG. 13B, and the method provided in the embodiment shown in FIG. 14.

In addition, an embodiment of this application further provides a second device 2100, as shown in FIG. 21. The first device 2100 includes a memory 2101 and a processor 2102. The memory 2101 is configured to store program code. The processor 2102 is configured to run instructions in the program code, to enable the second device 2100 to perform the method performed on the device 2 side in embodiments shown in FIG. 2 and FIG. 6 to FIG. 11, the method performed on the device 3 side in the embodiment shown in FIG. 13A and FIG. 13B, and the method provided in the embodiment shown in FIG. 15.

It may be understood that, in the foregoing embodiment, the processor may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field-programmable gate array, FPGA for short), generic array logic (English: generic array logic, GAL for short), or any combination thereof. The processor may be one processor, or may include a plurality of processors. The memory may be a volatile memory (English: volatile memory) such as a random-access memory (English: random-access memory, RAM for short); a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short), or a combination of the foregoing types of memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation based on an indication of each software module. In this embodiment, an operation performed by a software module is actually an operation performed by the processor based on an indication of the software module. After executing the computer-readable instructions in the memory, the processor may perform, as instructed by the computer-readable instruction, all operations that can be performed by the combined device or the remote attestation device.

It may be understood that, in the foregoing embodiment, the communications interface 1801 of the first device 1800 may be specifically used as the receiving unit 1601 and the sending unit 1603 in the first device 1600, to implement data communication between the first device and the second device. Similarly, the communications interface 1901 of the second device 1900 may be specifically used as the receiving unit 1701 and the sending unit 1703 in the second device 1700, to implement data communication between the first device and the second device.

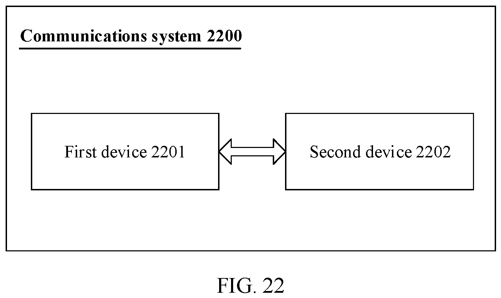

In addition, an embodiment of this application further provides a communications system 2200, as shown in FIG. 22. The communications system 2200 includes a first device 2201 and a second device 2202. The first device 2201 may be specifically the first device 1600, the first device 1800, or the first device 2000, and the second device 2202 may be specifically the second device 1700, the second device 1900, or the second device 2100.

In addition, an embodiment of this application further provides a computer-readable storage medium. The computer-readable storage medium stores instructions, and when the instructions are run on a computer, the computer is enabled to perform the method for secure communication in embodiments shown in FIG. 2, FIG. 6 to FIG. 11, and FIG. 13A and FIG. 13B to FIG. 15.

In addition, this embodiment of this application further provides a computer program product. When the computer program product runs on a computer, the computer is enabled to perform the method for secure communication in embodiments shown in FIG. 2, FIG. 6 to FIG. 11, and FIG. 13A and FIG. 13B to FIG. 15.

It should be noted that, in embodiments of this application, the "device" may be a network device, or may be another device such as a base station or a terminal. The "device" may alternatively be a chip, and may specifically include one or more chips. The network device may be, for example, a router, a switch, or a packet transport network (English: Packet Transport Network, PTN for short) device.

The "first" in names such as "first IPSec aging period" and "first IPSec key" mentioned in embodiments of this application is merely used for name identification, and does not indicate the first in order. This rule is also applicable to "second" and the like.

It can be learned from the foregoing descriptions of the implementations that, a person skilled in the art may clearly understand that a part or all of the steps of the methods in the foregoing embodiments may be implemented by using software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or an optical disc, and include several instructions for instructing a computer device (which may be a personal computer, a server, or a network communication device such as a router) to perform the methods described in embodiments or some parts of embodiments of this application.

## Claims

1. A method (1400) for secure communication, applied to a first device, wherein the method comprises:
receiving (103), in a second Internet protocol security, IPSec, aging period of the first device, first indication information sent by a second device, wherein the first indication information is used to indicate status information corresponding to a public-private key pair generated in a first IPSec aging period of the second device, wherein the status information comprises tick values or character strings, and wherein IPSec aging period changes on the device are indicated by using alternate occurrences of the status information;
establishing (105) a key negotiation template from a set of key negotiation templates, which are pre-established on the first and the second device,
wherein the key negotiation template is chosen based on whether the first indication information and second indication information are the same or not,
wherein the second indication information is used to indicate status information of a public-private key pair generated by the first device in the second IPSec aging period, and
wherein the key negotiation template is used to initiate the first device to generate a corresponding IPSec key in each IPSec aging period, when a matching condition defined in the chosen key negotiation template is met; and
generating (106) a first IPSec key based on the key negotiation template, wherein the first IPSec key is used to protect data transmitted between the first device and the second device in a first time period.

2. The method according to claim 1, wherein
the first indication information is the same as the second indication information, and the key negotiation template is a parallel key negotiation template; or
the first indication information is different from the second indication information, and the key negotiation template is a cross key negotiation template.

3. The method according to claim 1 or 2, wherein the receiving first indication information sent by a second device comprises:
receiving a KeepAlive packet or a bidirectional forwarding detection, BFD, packet sent by the second device, wherein the first indication information is carried in the KeepAlive packet or the BFD packet.

4. The method according to any one of claims 1 to 3, wherein the method further comprises:
receiving (302), in a fourth IPSec aging period of the first device, a first packet sent by the second device in a third IPSec aging period, wherein the first packet carries third indication information and a first public key generated by the second device in the third IPSec aging period, the third indication information is used to indicate status information corresponding to the first public key, and the third indication information is the same as the first indication information.

5. The method according to claim 4, wherein the generating a first IPSec key based on the key negotiation template comprises:
generating (303) the first IPSec key based on the key negotiation template, the third indication information, the first public key, and a first private key and fourth indication information that are generated by the first device in the fourth IPSec aging period, wherein the fourth indication information is used to indicate status information corresponding to the first private key, and the fourth indication information is the same as the second indication information.

6. The method according to any one of claims 1 to 5, wherein the method further comprises:
receiving (402), in a sixth IPSec aging period of the first device, a second packet sent by the second device, wherein the second packet carries a second public key and fifth indication information that are generated by the second device in a fifth IPSec aging period, and the fifth indication information indicates status information corresponding to the second public key; and
generating (403) a second IPSec key based on the key negotiation template, the second public key, the fifth indication information, and a second private key and sixth indication information that are generated by the first device in the sixth IPSec aging period, wherein the sixth indication information is used to indicate status information corresponding to the second private key, and the second IPSec key is used to protect data transmitted between the first device and the second device in a second time period.

7. The method according to any one of claims 4 to 6, wherein the first packet further comprises at least one of the following parameters: a DH group, an encapsulation mode, an encryption algorithm, and an authentication algorithm.

8. The method according to any one of claims 4 to 7, wherein the first packet is a border gateway protocol BGP message or a user datagram protocol UDP packet.

9. The method according to any one of claims 1 to 8, wherein the first IPSec key is an encryption key or an authentication key.

10. The method according to any one of claims 1 to 9, wherein each IPSec aging period of the first device has a first duration, each IPSec aging period of the second device has a second duration, and the first duration is not equal to the second duration; and the generating a first IPSec key specifically comprises:
generating the first IPSec key when the following condition is met, wherein the condition comprises: neither of the first public key and the first private key that participate in generating the first IPSec key participates in generating another IPSec key other than the first IPSec key.

11. A method (1500) for secure communication, applied to a second device, wherein the method comprises:
generating (101) first indication information in a first Internet protocol security, IPSec, aging period of the second device, wherein the first indication information is used to indicate status information corresponding to a public-private key pair generated by the second device in the first IPSec aging period, wherein the status information comprises tick values or character strings, and wherein IPSec aging period changes on the second
device are indicated by using alternate occurrences of the status information; and
sending (102) the first indication information to a first device.

12. The method according to claim 11, wherein the sending the first indication information to a first device comprises:
sending a KeepAlive packet or a bidirectional forwarding detection, BFD, packet to the first device, wherein the first indication information is carried in the KeepAlive packet or the BFD packet.

13. The method according to claim 11 or 12, wherein the method further comprises:
receiving, in the first IPSec aging period, second indication information sent by the first device, wherein the second indication information is used to indicate status information corresponding to a public-private key pair generated by the first device in a second IPSec aging period;
establishing a key negotiation template from a set of key negotiation templates, which are pre-established on the first and the second device,
wherein the key negotiation template is chosen based on whether the second indication information and the first indication information are the same or not, and
wherein the key negotiation template is used to initiate the first device to generate a corresponding IPSec key in each IPSec aging period, when a matching condition defined in the chosen key negotiation template is met; and
generating a first IPSec key based on the key negotiation template, wherein the first IPSec key is used to protect data transmitted between the first device and the second device in a first time period.

14. A first device (1800) configured to perform the method according to any one of claims 1 to 10.

15. A second device (1900) configured to perform the method according to any one of claims 11 to 13.

## Patentansprüche

1. Verfahren (1400) zur sicheren Kommunikation, das auf ein erstes Gerät angewendet wird, wobei das Verfahren Folgendes umfasst:
Empfangen (103), in einer zweiten "Internet Protocol Security"-, IPSec-, Alterungsperiode des ersten Geräts, von durch ein zweites Gerät gesendeten ersten Anzeigeinformationen, wobei die ersten Anzeigeinformationen verwendet werden, um Statusinformationen anzuzeigen, die einem Paar aus öffentlichem und privatem Schlüssel entsprechen, das in einer ersten IPSec-Alterungsperiode des zweiten Geräts erzeugt wurde, wobei die Statusinformationen Tickwerte oder Zeichenfolgen umfassen, und wobei IPSec-Alterungsperiodenänderungen auf dem Gerät unter Verwendung alternierender Vorkommnisse der Statusinformationen angezeigt werden;
Erstellen (105) einer Schlüsselverhandlungsvorlage aus einem Satz von Schlüsselverhandlungsvorlagen, die auf dem ersten und dem zweiten Gerät vorerstellt sind,
wobei die Schlüsselverhandlungsvorlage basierend darauf ausgewählt wird, ob die ersten Anzeigeinformationen und zweiten Anzeigeinformationen die gleichen sind oder nicht,
wobei die zweiten Anzeigeinformationen verwendet werden, um Statusinformationen eines Paars aus öffentlichem und privatem Schlüssel anzuzeigen, das durch das erste Gerät in der zweiten IPSec-Alterungsperiode erzeugt wurde, und
wobei die Schlüsselverhandlungsvorlage verwendet wird, um zu initiieren, dass das erste Gerät einen entsprechenden IPSec-Schlüssel in jeder IPSec-Alterungsperiode erzeugt, wenn eine in der ausgewählten Schlüsselverhandlungsvorlage definierte Übereinstimmungsbedingung erfüllt ist; und
Erzeugen (106) eines ersten IPSec-Schlüssels basierend auf der Schlüsselverhandlungsvorlage, wobei der erste IPSec-Schlüssel verwendet wird, um Daten zu schützen, die zwischen dem ersten Gerät und dem zweiten Gerät in einer ersten Zeitperiode übertragen werden.

2. Verfahren nach Anspruch 1, wobei
die ersten Anzeigeinformationen die gleichen wie die zweiten Anzeigeinformationen sind, und die Schlüsselverhandlungsvorlage eine parallele Schlüsselverhandlungsvorlage ist; oder
die ersten Anzeigeinformationen sich von den zweiten Anzeigeinformationen unterscheiden, und die Schlüsselverhandlungsvorlage eine übergreifende Schlüsselverhandlungsvorlage ist.

3. Verfahren nach Anspruch 1 oder 2, wobei das Empfangen von durch ein zweites Gerät gesendeten ersten Anzeigeinformationen Folgendes umfasst:
Empfangen eines "KeepAlive"-Pakets oder eines "Bidirectional Forwarding Detection"-, BFD-, Pakets, das durch das zweite Gerät gesendet wird, wobei die ersten Anzeigeinformationen in dem "KeepAlive"-Paket oder dem BFD-Paket getragen werden.

4. Verfahren nach einem der Ansprüche 1 bis 3, wobei das Verfahren ferner Folgendes umfasst:
Empfangen (302), in einer vierten IPSec-Alterungsperiode des ersten Geräts, eines durch das zweite Gerät in einer dritten IPSec-Alterungsperiode gesendeten ersten Pakets, wobei das erste Paket dritte Anzeigeinformationen und einen ersten öffentlichen Schlüssel trägt, der durch das zweite Gerät in der dritten IPSec-Alterungsperiode erzeugt wurde, wobei die dritten Anzeigeinformationen verwendet werden, um Statusinformationen anzuzeigen, die dem ersten öffentlichen Schlüssel entsprechen, und wobei die dritten Anzeigeinformationen die gleichen wie die ersten Anzeigeinformationen sind.

5. Verfahren nach Anspruch 4, wobei das Erzeugen eines ersten IPSec-Schlüssels basierend auf der Schlüsselverhandlungsvorlage Folgendes umfasst:
Erzeugen (303) des ersten IPSec-Schlüssels basierend auf der Schlüsselverhandlungsvorlage, den dritten Anzeigeinformationen, dem ersten öffentlichen Schlüssel und einem ersten privaten Schlüssel und vierten Anzeigeinformationen, die durch das erste Gerät in der vierten IPSec-Alterungsperiode erzeugt werden, wobei die vierten Anzeigeinformationen verwendet werden, um Statusinformationen anzuzeigen, die dem ersten privaten Schlüssel entsprechen, und wobei die vierten Anzeigeinformationen die gleichen wie die zweiten Anzeigeinformationen sind.

6. Verfahren nach einem der Ansprüche 1 bis 5, wobei das Verfahren ferner Folgendes umfasst:
Empfangen (402), in einer sechsten IPSec-Alterungsperiode des ersten Geräts, eines durch das zweite Gerät gesendeten zweiten Pakets, wobei das zweite Paket einen zweiten öffentlichen Schlüssel und fünfte Anzeigeinformationen trägt, die durch das zweite Gerät in einer fünften IPSec-Alterungsperiode erzeugt werden, und wobei die fünften Anzeigeinformationen Statusinformationen anzeigen, die dem zweiten öffentlichen Schlüssel entsprechen; und
Erzeugen (403) eines zweiten IPSec-Schlüssels basierend auf der Schlüsselverhandlungsvorlage, dem zweiten öffentlichen Schlüssel, den fünften Anzeigeinformationen und einem zweiten privaten Schlüssel und sechsten Anzeigeinformationen, die durch das erste Gerät in der sechsten IPSec-Alterungsperiode erzeugt werden, wobei die sechsten Anzeigeinformationen verwendet werden, um Statusinformationen anzuzeigen, die dem zweiten privaten Schlüssel entsprechen, und wobei der zweite IPSec-Schlüssel verwendet wird, um Daten zu schützen, die zwischen dem ersten Gerät und dem zweiten Gerät in einer zweiten Zeitperiode übertragen werden.

7. Verfahren nach einem der Ansprüche 4 bis 6, wobei das erste Paket ferner mindestens einen der folgenden Parameter umfasst: eine DH-Gruppe, einen Verkapselungsmodus, einen Verschlüsselungsalgorithmus und einen Authentifizierungsalgorithmus.

8. Verfahren nach einem der Ansprüche 4 bis 7, wobei das erste Paket eine "Border Gateway Protocol"-BGP-Nachricht oder ein "User Datagram Protocol"-UDP-Paket ist.

9. Verfahren nach einem der Ansprüche 1 bis 8, wobei der erste IPSec-Schlüssel ein Verschlüsselungsschlüssel oder ein Authentifizierungsschlüssel ist.

10. Verfahren nach einem der Ansprüche 1 bis 9, wobei jede IPSec-Alterungsperiode des ersten Geräts eine erste Dauer aufweist, jede IPSec-Alterungsperiode des zweiten Geräts eine zweite Dauer aufweist und die erste Dauer nicht gleich der zweiten Dauer ist; und wobei das Erzeugen eines ersten IPSec-Schlüssels insbesondere Folgendes umfasst:
Erzeugen des ersten IPSec-Schlüssels, wenn die folgende Bedingung erfüllt ist, wobei die Bedingung Folgendes umfasst: keiner des ersten öffentlichen Schlüssels und des ersten privaten Schlüssels, die am Erzeugen des ersten IPSec-Schlüssels beteiligt sind, ist am Erzeugen eines anderen IPSec-Schlüssels als dem ersten IPSec-Schlüssel beteiligt.

11. Verfahren (1500) zur sicheren Kommunikation, das auf ein zweites Gerät angewendet wird, wobei das Verfahren Folgendes umfasst:
Erzeugen (101) erster Anzeigeinformationen in einer ersten "Internet Protocol Security"-, IPSec-, Alterungsperiode des zweiten Geräts, wobei die ersten Anzeigeinformationen verwendet werden, um Statusinformationen anzuzeigen, die einem Paar aus öffentlichem und privatem Schlüssel entsprechen, das durch das zweite Gerät in der ersten IPSec-Alterungsperiode erzeugt wurde, wobei die Statusinformationen Tickwerte oder Zeichenfolgen umfassen, und wobei IPSec-Alterungsperiodenänderungen auf dem zweiten Gerät unter Verwendung alternierender Vorkommnisse der Statusinformationen angezeigt werden; und
Senden (102) der ersten Anzeigeinformationen an ein erstes Gerät.

12. Verfahren nach Anspruch 11, wobei das Senden der ersten Anzeigeinformationen an ein erstes Gerät Folgendes umfasst:
Senden eines "KeepAlive"-Pakets oder eines "Bidirectional Forwarding Detection"-, BFD-, Pakets an das erste Gerät, wobei die ersten Anzeigeinformationen in dem "KeepAlive"-Paket oder dem BFD-Paket getragen werden.

13. Verfahren nach Anspruch 11 oder 12, wobei das Verfahren ferner Folgendes umfasst:
Empfangen, in der ersten IPSec Alterungsperiode, von durch das erste Gerät gesendeten zweiten Anzeigeinformationen, wobei die zweiten Anzeigeinformationen verwendet werden, um Statusinformationen anzuzeigen, die einem Paar aus öffentlichem und privatem Schlüssel entsprechen, das durch das erste Gerät in einer zweiten IPSec-Alterungsperiode erzeugt wurde;
Erstellen einer Schlüsselverhandlungsvorlage aus einem Satz von Schlüsselverhandlungsvorlagen, die auf dem ersten und dem zweiten Gerät vorerstellt sind,
wobei die Schlüsselverhandlungsvorlage basierend darauf ausgewählt wird, ob die zweiten Anzeigeinformationen und die ersten Anzeigeinformationen die gleichen sind oder nicht, und
wobei die Schlüsselverhandlungsvorlage verwendet wird, um zu initiieren, dass das erste Gerät einen entsprechenden IPSec-Schlüssel in jeder IPSec-Alterungsperiode erzeugt, wenn eine in der ausgewählten Schlüsselverhandlungsvorlage definierte Übereinstimmungsbedingung erfüllt ist; und
Erzeugen eines ersten IPSec-Schlüssels basierend auf der Schlüsselverhandlungsvorlage, wobei der erste IPSec-Schlüssel verwendet wird, um Daten zu schützen, die zwischen dem ersten Gerät und dem zweiten Gerät in einer ersten Zeitperiode übertragen werden.

14. Erstes Gerät (1800), das dazu konfiguriert ist, das Verfahren nach einem der Ansprüche 1 bis 10 durchzuführen.

15. Zweites Gerät (1900), das dazu konfiguriert ist, das Verfahren nach einem der Ansprüche 11 bis 13 durchzuführen.

## Revendications

1. Procédé (1400) pour la communication sécurisée, appliqué à un premier dispositif, le procédé comprenant les étapes consistant à :
recevoir (103), dans une deuxième période de vieillissement de sécurité de protocole Internet, IPSec, du premier dispositif, une première information d'indication envoyée par un deuxième dispositif, la première information d'indication étant utilisée pour indiquer une information de statut correspondant à une paire de clés publique-privée générée dans une première période de vieillissement IPSec du deuxième dispositif, l'information de statut comprenant des valeurs tic-tac ou des chaînes de caractères, et les variations de la période de vieillissement IPSec sur le dispositif étant indiquées au moyen d'occurrences alternées de l'information de statut ;
établir (105) un modèle de négociation de clé à partir d'un ensemble de modèles de négociation de clé, qui sont préétablis sur les premier et deuxième dispositifs,
dans lequel le modèle de négociation de clé est choisi selon que la première information d'indication et la deuxième information d'indication sont identiques ou ne le sont pas,
dans lequel la deuxième information d'indication est utilisée pour indiquer une information de statut d'une paire de clés publique-privée générée par le premier dispositif dans la deuxième période de vieillissement IPSec, et
dans lequel le modèle de négociation de clé est utilisé pour faire que le premier dispositif génère une clé IPSec correspondante dans chaque période de vieillissement IPSec, lorsqu'une condition de concordance définie dans le modèle de négociation de clé choisi est satisfaite ; et
générer (106) une première clé IPSec sur la base du modèle de négociation de clé, la première clé IPSec étant utilisée pour protéger les données transmises entre le premier dispositif et le deuxième dispositif dans une première période de temps.

2. Procédé selon la revendication 1, dans lequel
la première information d'indication est identique à la deuxième information d'indication, et le modèle de négociation de clé est un modèle de négociation de clé parallèle ; ou
la première information d'indication est différente de la deuxième information d'indication, et le modèle de négociation de clé est un modèle de négociation de clé croisé.

3. Procédé selon la revendication 1 ou 2, dans lequel la réception d'une première information d'indication envoyée par un deuxième dispositif consiste à :
recevoir un paquet KeepAlive ou un paquet de détection d'expédition bidirectionnelle, BFD, envoyé par le deuxième dispositif, la première information d'indication étant transportée dans le paquet KeepAlive ou le paquet BFD.

4. Procédé selon l'une quelconque des revendications 1 à 3, le procédé comprenant également l'étape consistant à :
recevoir (302), dans une quatrième période de vieillissement IPSec du premier dispositif, un premier paquet envoyé par le deuxième dispositif dans une troisième période de vieillissement IPSec, le premier paquet transportant une troisième information d'indication et une première clé publique générées par le deuxième dispositif dans la troisième période de vieillissement IPSec, la troisième information d'indication étant utilisée pour indiquer une information de statut correspondant à la première clé publique, et la troisième information d'indication étant identique à la première information d'indication.

5. Procédé selon la revendication 4, dans lequel la génération d'une première clé IPSec sur la base du modèle de négociation de clé consiste à :
générer (303) la première clé IPSec sur la base du modèle de négociation de clé, de la troisième information d'indication, de la première clé publique, et d'une première clé privée et d'une quatrième information d'indication qui sont générées par le premier dispositif dans la quatrième période de vieillissement IPSec, la quatrième information d'indication étant utilisée pour indiquer une information de statut correspondant à la première clé privée, et la quatrième information d'indication étant identique à la deuxième information d'indication.

6. Procédé selon l'une quelconque des revendications 1 à 5, le procédé comprenant également les étapes consistant à :
recevoir (402), dans une sixième période de vieillissement IPSec du premier dispositif, un deuxième paquet envoyé par le deuxième dispositif, le deuxième paquet transportant une deuxième clé publique et une cinquième information d'indication qui sont générées par le deuxième dispositif dans une cinquième période de vieillissement IPSec, et la cinquième information d'indication indiquant une information de statut correspondant à la deuxième clé publique ; et
générer (403) une deuxième clé IPSec sur la base du modèle de négociation de clé, de la deuxième clé publique, de la cinquième information d'indication, et d'une deuxième clé privée et d'une sixième information d'indication qui sont générées par le premier dispositif dans la sixième période de vieillissement IPSec, la sixième information d'indication étant utilisée pour indiquer une information de statut correspondant à la deuxième clé privée, et la deuxième clé IPSec étant utilisée pour protéger les données transmises entre le premier dispositif et le deuxième dispositif dans une deuxième période de temps.

7. Procédé selon l'une quelconque des revendications 4 à 6, dans lequel le premier paquet comprend également au moins un des paramètres suivants : un groupe DH, un mode d'encapsulation, un algorithme de chiffrement et un algorithme d'authentification.

8. Procédé selon l'une quelconque des revendications 4 à 7, dans lequel le premier paquet est un message de protocole de passerelle de périphérie BGP ou un paquet de protocole de datagramme d'utilisateur UDP.

9. Procédé selon l'une quelconque des revendications 1 à 8, dans lequel la première clé IPSec est une clé de chiffrement ou une clé d'authentification.

10. Procédé selon l'une quelconque des revendications 1 à 9, dans lequel chaque période de vieillissement IPSec du premier dispositif a une première durée, chaque période de vieillissement IPSec du deuxième dispositif a une deuxième durée, et la première durée n'est pas égale à la deuxième durée ; et la génération d'une première clé IPSec consiste spécifiquement à :
générer la première clé IPSec lorsque la condition suivante est satisfaite, la condition comprenant : ni la première clé publique, ni la première clé privée qui participent à la génération de la première clé IPSec ne participent à la génération d'une autre clé IPSec différente de la première clé IPSec.

11. Procédé (1500) pour la communication sécurisée, appliqué à un deuxième dispositif, le procédé comprenant les étapes consistant à :
générer (101) une première information d'indication dans une première période de vieillissement de sécurité de protocole Internet, IPSec, du deuxième dispositif, la première information d'indication étant utilisée pour indiquer une information de statut correspondant à une paire de clés publique-privée générée par le deuxième dispositif dans la première période de vieillissement IPSec, l'information de statut comprenant des valeurs tic-tac ou des chaînes de caractères, et les variations de la période de vieillissement IPSec sur le deuxième dispositif étant indiquées au moyen d'occurrences alternées de l'information de statut ; et
envoyer (102) la première information d'indication à un premier dispositif.

12. Procédé selon la revendication 11, dans lequel l'envoi de la première information d'indication à un premier dispositif consiste à :
envoyer un paquet KeepAlive ou un paquet de détection d'expédition bidirectionnelle, BFD, au premier dispositif, la première information d'indication étant transportée dans le paquet KeepAlive ou le paquet BFD.

13. Procédé selon la revendication 11 ou 12, le procédé comprenant également les étapes consistant à :
recevoir, dans la première période de vieillissement IPSec, une deuxième information d'indication envoyée par le premier dispositif, la deuxième information d'indication étant utilisée pour indiquer une information de statut correspondant à une paire de clés publique-privée générée par le premier dispositif dans une deuxième période de vieillissement IPSec ;
établir un modèle de négociation de clé à partir d'un ensemble de modèles de négociation de clé, qui sont préétablis sur les premier et deuxième dispositifs,
dans lequel le modèle de négociation de clé est choisi selon que la deuxième information d'indication et la première information d'indication sont identiques ou ne le sont pas, et
dans lequel le modèle de négociation de clé est utilisé pour faire que le premier dispositif génère une clé IPSec correspondante dans chaque période de vieillissement IPSec, lorsqu'une condition de concordance définie dans le modèle de négociation de clé choisi est satisfaite ; et
générer une première clé IPSec sur la base du modèle de négociation de clé, la première clé IPSec étant utilisée pour protéger les données transmises entre le premier dispositif et le deuxième dispositif dans une première période de temps.

14. Premier dispositif (1800) configuré pour effectuer le procédé selon l'une quelconque des revendications 1 à 10.

15. Deuxième dispositif (1900) configuré pour effectuer le procédé selon l'une quelconque des revendications 11 à 13.
